# EUROPEAN PATENT APPLICATION

(11) **EP 4 797 338 A1**
(43) Date of publication of application: **26.08.2026**
(21) Application number: 24921415.6
(22) Date of filing: 05.09.2024
(51) Int. Cl.: H01M 4/131, H01M 4/13

(54) **POSITIVE ELECTRODE SHEET, PREPARATION METHOD THEREFOR, BATTERY CELL, BATTERY, AND ELECTRIC APPARATUS**

(30) Priority: 29.01.2024 CN 202410116827
(71) Applicant: Contemporary Amperex Technology Co., Limited, Ningde, Fujian 352100 (CN)
(72) Inventor: YUN, Liang, Ningde, Fujian 352100 (CN); SUN, Xin, Ningde, Fujian 352100 (CN)
(74) Representative: Lorenz Seidler Gossel Part. mbB
(86) International application number: PCT/CN2024/117099
(87) International publication number: WO 2025/161390

(57) **Abstract**

A positive electrode sheet, a preparation method therefor, a battery cell, a battery, and an electric apparatus. The positive electrode sheet comprises: a positive electrode current collector; a first positive electrode active material film layer disposed on at least one side of the positive electrode current collector, the first positive electrode active material film layer comprising solid first positive electrode active material particles; and a second positive electrode active material film layer disposed between the first positive electrode active material film layer and the positive electrode current collector, the second positive electrode active material film layer comprising second positive electrode active material particles having a hollow structure. During charging and discharging of a battery, comprising the positive electrode sheet of an embodiment helps to balance the disembedding speed of active ions in the first positive electrode active material film layer and the second positive electrode active material film layer, which is beneficial to the gram capacity of the positive electrode sheet, and improves the cycling stability of the battery. The battery cell, the battery, and the electric apparatus comprising the positive electrode sheet also have the described advantages.

## Description

### CROSS-REFERENCE TO RELATED APPLICATIONS

The present application claims priority to Chinese Patent Application No. 202410116827.2, filed on January 29, 2024 and entitled "Positive Electrode sheet and Preparation Method Therefor, Battery Cell, Battery, and Electric Device", which is incorporated herein by reference in its entirety.

### TECHNICAL FIELD

The present application relates to the technical field of batteries, and in particular, to a positive electrode sheet and a preparation method therefor, a battery cell, a battery, and an electric device.

### BACKGROUND

In recent years, as the application range of batteries becomes wider, the batteries are widely used in various fields such as energy storage power systems of hydraulic power stations, thermal power stations, wind power stations, and solar power stations, as well as power tools, electric bicycles, electric motorcycles, electric vehicles, military equipment, and aerospace. Due to great development of batteries, higher requirements are put forward for energy density, cycle performance, safety performance, and the like of the batteries.

In order to improve the capacity of the batteries, the active material film layer of the positive electrode sheet is usually designed to be relatively thick, which still cannot meet the requirements of improving the capacity and cycle performance of the batteries, and needs to be further improved.

### SUMMARY

The present application provides a positive electrode sheet and a preparation method thereof, a battery cell, a battery and an electric device, where the positive electrode sheet has a high gram capacity and good cycle stability.

In a first aspect, an embodiment of the present application provides a positive electrode sheet, including:
a positive electrode current collector;
a first positive electrode active material film layer disposed on at least one side of the positive electrode current collector, the first positive electrode active material film layer including solid first positive electrode active material particles; and
a second positive electrode active material film layer disposed between the first positive electrode active material film layer and the positive electrode current collector, the second positive electrode active material film layer including second positive electrode active material particles having a hollow structure.

According to the embodiments of the present application, the positive electrode sheet including the embodiment of the present application improves the discharge gram capacity and stability of the positive electrode sheet during the charging and discharging process of the battery, and prolongs the charging and discharging time of the positive electrode sheet in the battery. The reasons for the analysis may be: In the mass transfer process of the electrolyte, the concentration of the active ions gradually decreases from the separator to the position of the positive electrode sheet close to the positive electrode current collector, and for the solid first positive electrode active material particles in the first positive electrode active material film layer, the deintercalation distance of the active ions in the first positive electrode active material film layer is relatively long (the mass transfer distance is relatively long). The second positive electrode active material film layer includes the second positive electrode active material particles having a hollow structure, and the second positive electrode active material particles having a hollow structure reduce the deintercalation distance (the mass transfer distance is relatively short) of the active ions in the second positive electrode active material film layer, which is beneficial to balancing the deintercalation speed of the active ions in the first positive electrode active material film layer and the second positive electrode active material film layer, and balancing the difference in the charge and discharge (SOC) speed of the active ions between the first positive electrode active material film layer and the second positive electrode active material film layer, thereby facilitating the exertion of the gram capacity of the positive electrode sheet.

In addition, the second positive electrode active material particles have a hollow structure, which is beneficial to the presence of the second positive active material particles in the positive electrode sheet, thereby dispersing the stress of the positive electrode sheet during the cycle process, improving the cycle stability of the positive electrode sheet, and further improving the cycle performance of the battery.

In some embodiments, the first positive electrode active material particles and the second positive electrode active material particles are respectively nickel-containing positive electrode active particles.

When the nickel-containing positive electrode active particles are applied to a battery, such as a lithium battery, for example, the radius of Ni²⁺ ion is similar to the radius of Li⁺, the phenomenon of cation mixing will seriously occur, so that the electrochemical performance of the lithium-containing ternary positive electrode active material is deteriorated, especially in a high-nickel system, the cation mixing trend is increased, and the cycle performance of the battery is deteriorated. According to the embodiments of the present application, the first positive electrode active material film layer includes solid first positive electrode active material particles, and the second positive electrode active material film layer includes hollow particles, which shortens the distance of transferring protons of lithium ions, and generally, the first positive electrode active material film layer has a high lithium ion concentration, but the solid phase mass transfer distance of lithium ions is longer, and the second positive electrode active material film layer has a low lithium ion concentration, but the solid phase mass transfer time is shorter, which balances the difference of deintercalation and intercalation of active lithium ions between the active material particles in the positive electrode sheet, facilitates the exertion of the gram capacity of the positive electrode sheet, reduces the ratio of the active material particles in the positive electrode sheet that do not participate in the charge and discharge cycle to the entire active material particles, thereby improving the gram capacity of the positive electrode sheet and improving the cycle performance of the positive electrode sheet in the battery.

In some optional embodiments, an average particle size DV¹50 of the first positive electrode active material particles is greater than or equal to an average particle size Dv²50 of the second positive electrode active material particles.

According to the embodiments of the present application, the average particle size Dv¹50 of the first positive electrode active material particles is greater than or equal to the average particle size Dv²50 of the second positive electrode active material particles, which is beneficial to increasing the mass transfer distance of the first positive electrode active material particles in the first positive electrode active material film layer and reduce the mass transfer distance of the second positive electrode active material particles in the second positive electrode active material film layer, thereby coping with the phenomenon that the concentration of active ions in the first positive electrode active material film layer is relatively high and the concentration of active ions in the second positive electrode active material film layer is relatively low, and balancing the deintercalation speed of active ions of the two layers, thereby improving the gram capacity and cycle performance of the positive electrode sheet.

In addition, the relatively large average particle size Dv¹50 of the first positive electrode active material particles is beneficial to increasing the porosity of the first positive electrode active material film layer, and thus is beneficial to the presence of the first positive electrode active material particles in the positive electrode sheet, thereby dispersing the stress of the first positive electrode active material particles in the positive electrode sheet during the cycle process, and improving the cycle stability of the positive electrode sheet, which is beneficial to further improving the cycle performance of the battery.

In some optional embodiments, the average particle size Dv¹50 of the first positive electrode active material particles being 8 µm to 18 µm.

According to the embodiments of the present application, the average particle size Dv¹50 of the first positive electrode active material particles within the above range is beneficial to increasing the mass transfer distance of the first positive electrode active material particles in the first positive electrode active material film layer, thereby coping with the phenomenon that the concentration of active ions in the first positive electrode active material film layer is relatively high and the concentration of active ions in the second positive electrode active material film layer is relatively low, and balancing the deintercalation speed of active ions of the two layers, thereby improving the gram capacity and cycle performance of the positive electrode sheet.

In some optional embodiments, the average particle size Dv²50 of the second positive electrode active material particles being 2 µm to 10 µm.

According to the embodiments of the present application, the average particle size Dv²50 of the second positive electrode active material particles within the above range is beneficial to reducing the mass transfer distance of the second positive electrode active material particles in the second positive electrode active material film layer, thereby coping with the phenomenon that the concentration of active ions in the first positive electrode active material film layer is relatively high and the concentration of active ions in the second positive electrode active material film layer is relatively low, and balancing the deintercalation speed of active ions of the two layers, thereby improving the gram capacity and cycle performance of the positive electrode sheet.

In some optional embodiments, a particle size distribution span of the first positive electrode active material particles is 0.3 to 0.7.

According to the embodiments of the present application, the particle size distribution span of the first positive electrode active material particles is within the above range, which can improve the compaction density of the material, improve the discharge capacity of the battery, and balance the active ion deintercalation speed of the two layers, thereby improving the gram capacity and cycle performance of the positive electrode sheet.

In some optional embodiments, a particle size distribution span of the second positive electrode active material particles is 0.9 to 1.3.

According to the embodiments of the present application, the particle size distribution span of the second positive active material particles within the above range can increase the compaction density of the material, can increase the discharge capacity of the battery, and balance the active ion deintercalation speed of the two layers, thereby improving the gram capacity and cycle performance of the positive electrode sheet.

In some optional embodiments, an inner diameter d1 of the hollow structure is 0.6 µm to 5 µm.

According to the embodiments of the present application, the second positive electrode active material particles have the hollow structure, which can buffer a volume change of the positive electrode active material during charging and discharging, thereby stabilizing the structure and improving the cycle performance. On the other hand, the second positive electrode active material particles have more three dimensional pores, which expands the contact area between the material and the electrolyte, and shortens the migration distance of lithium ions, thereby improving the speed of active ions in the second positive electrode active material film layer, which is beneficial to reducing the internal resistance of the battery, and the battery has excellent rate performance. Meanwhile, the second positive active material particles have a hollow structure, and thus have more active sites for lithium ions, which improves the gram capacity of the material, improves the gram capacity of the positive electrode sheet, and improves the energy density of the battery.

In some optional embodiments, a wall thickness d2 of an outer wall of the hollow structure being 0.6 µm to 10 µm.

In the embodiments of the present application, the wall thickness d2 of the outer wall of the hollow structure is controlled within an appropriate range, which can improve the structural stability of the second positive active material particles, improve the gram capacity of the material in the positive electrode sheet, improve the energy density, rate performance and cycle performance of the battery, and comprehensively improve the electrochemical performance of the battery.

Dv²50 of the second positive active material particle, the inner diameter d1 and the outer wall thickness d2 of the hollow structure are important parameters of the second positive active material particle, which affect the structural properties of the material. When Dv²50 of the second positive active material particle, the inner diameter d1 of the hollow structure and the thickness d2 of the outer wall are within the appropriate ranges, the material has more active sites of active ions, thereby improving the gram capacity of the material, so as to improve the structural stability of the material, and when the material is applied to a lithium battery for charge-discharge cycling, the lithium-nickel mixing phenomenon is effectively improved, and the migration rates of active ions and electrons are significantly improved, which is beneficial to balancing the deintercalation speed of active ions in the positive electrode sheet of the battery, thereby facilitating the cycle performance of the battery.

In some optional embodiments, the first positive electrode active material particles and the second positive electrode active material particles respectively include the following structural formulas: LiₐNiₓCo_{y}M_{1-x-y}O₂, where M includes one or more of Mn, Al, B, Zr, Sr, Y, Sb, W, Ti, Mg, Nb, and Ba, 0.55≤x≤1.05, 0≤y≤0.45, and 0.8≤a≤1.2.

According to the embodiments of the present application, the use of the above materials can ensure a high gram capacity of the first positive electrode active material film layer and the second positive electrode active material film layer, such that the gram capacity of the positive electrode sheet is improved, and a battery has a high discharge capacity and energy density.

In some optional embodiments, a specific surface area of the positive electrode active material is 0.1 m²/g to 0.5 m²/g.

In some optional embodiments, a specific surface area of the positive electrode active material is 0.35 m²/g to 0.8 m²/g.

According to the embodiments of the present application, the first positive electrode active material particles have an appropriate specific surface area, and the second positive electrode active material particles have an appropriate specific surface area, respectively, thereby coping with the phenomenon that the concentration of active ions in the first positive electrode active material film layer is relatively high, and the concentration of active ions in the second positive electrode active material film layer is relatively low, and balancing the deintercalation speed of active ions of the two layers, thereby improving the gram capacity and cycle performance of the positive electrode sheet.

In some optional embodiments, a tap density of the first positive electrode active material particles being 1.8 g/cm³ to 4 g/cm³.

In some optional embodiments, a tap density of the second positive electrode active material particles being 1.3 g/cm³ to 2.6 g/cm³.

According to the embodiments of the present application, the first positive electrode active material particles have a suitable tap density and the second positive electrode active material particles have a suitable tap density, thereby coping with the phenomenon that the concentration of active ions in the first positive electrode active material film layer is relatively high and the concentration of active ions in the second positive electrode active material film layer is relatively low, and balancing the deintercalation speed of the active ions of the two layers, thereby improving the gram capacity and cycle performance of the positive electrode sheet.

In some optional embodiments, the second positive electrode active material film layer includes third positive electrode active material particles, and the average particle size Dv²50 of the second positive electrode active material particles is greater than an average particle size Dv³50 of the third positive electrode active material particles.

In this embodiment of the present application, the ratio of the average particle size Dv²50 of the second positive electrode active material particles to the average particle size Dv³50 of the third positive electrode active material particles is controlled within the above range, and the third positive electrode active material particles match the second positive electrode active material particles, which is beneficial to increasing the mass transfer distance of the second positive electrode active material film layer, increasing the deintercalation speed of active ions in the second positive electrode active material film layer, balancing the difference (SOC difference) between the charging and discharging speeds of the first active material film layer and the second active material film layer, and facilitating the exertion of the gram capacity.

In some optional embodiments, the average particle size Dv³50 of the third positive electrode active material particles is 0.8 µm to 5 µm.

According to the embodiments of the present application, when the average particle size Dv³50 of the third positive electrode active material particles is within the above range, the particle size is relatively small, and the anisotropy is smaller, in this case, the volume expansion rate of the third positive electrode active material particles in the battery with charging and discharging is lower, such that the cycle stability of the third positive electrode active material particles is better, the overall cycle stability of the positive electrode sheet can be further improved, and the cycle performance of the battery can be further improved.

In some optional embodiments, a specific surface area of the third positive electrode active material particles is 0.4 m²/g to 0.9 m²/g.

According to the embodiments of the present application, the specific surface area of the third positive electrode active material particle is within the above range, which is beneficial to controlling the specific surface area and the compaction density of the second positive electrode active material film layer, improving the cycle stability of the positive electrode sheet, and further improving the cycle performance of the battery.

To sum up, by controlling the specific surface areas of the first positive electrode active material particles, the second positive electrode active material particles, and the third positive electrode active material particles within appropriate ranges, the battery has high discharge capacity and energy density as well as excellent rate performance and cycle performance, and the electrochemical performance of the battery is comprehensively improved.

In some optional embodiments, a tap density of the third positive electrode active material particles is 1.8 g/cm³ to 3.4 g/cm³.

According to the embodiments of the present application, the tap density of the third positive electrode active material particle is within the above range, which is beneficial to controlling the compaction density of the second positive electrode active material film layer, improving the cycle stability of the positive electrode sheet, and further improving the cycle performance of the battery.

In some optional embodiments, the third positive electrode active material particles are one or more of particles having a hollow structure and solid particles.

In some optional embodiments, a particle size distribution span of the third positive electrode active material particles is 0.8 to 1.5.

According to the embodiments of the present application, the particle size distribution span of the third positive electrode active material particles is within the above range, which is beneficial to improving the compaction density of the second active material film layer, balancing the active ion deintercalation speed of the two layers, and improving the stability of the positive electrode sheet, thereby improving the gram capacity and cycle performance of the positive electrode sheet.

In some optional embodiments, the third positive active material particles include the following structural formulas: LiₐNiₓCo_{y}M_{1-x-y}O₂, where M includes one or more of Mn, Al, B, Zr, Sr, Y, Sb, W, Ti, Mg, Nb, and Ba, 0.55≤x≤1.05, 0≤y≤0.45, and 0.8≤a≤1.2.

According to the embodiments of the present application, the use of the above materials can ensure a high gram capacity of the positive electrode active material, such that the gram capacity of the positive electrode sheet is improved, and a battery has a high discharge capacity and energy density.

In some optional embodiments, the first positive electrode active material particles, the second positive electrode active material particles, and the third positive electrode active material particles respectively include any one or more of LiNi_{0.96}Co_{0.02}Mn_{0.01}Ba_{0.01}O₂, LiNi_{0.97}Co_{0.01}Mn_{0.01}Ba_{0.01}O₂, and LiNi_{0.98}Co_{0.01}Mn_{0.005}Ba_{0.005}O₂. The above positive electrode active material can better balance the charging and discharging speed of the positive electrode sheet in the battery, balance the average of the charging and discharging efficiency of the surface and the side close to the positive electrode current collector, and improve the gram capacity of the positive electrode sheet, such that the battery has high discharge capacity and energy density.

In some optional embodiments, a ratio of the thickness h1 of the first positive electrode active material film layer to the thickness h2 of the second positive electrode active material film layer is 10: (3.3 to 23.5).

According to the embodiments of the present application, by controlling the ratio of the thickness h1 of the first positive electrode active material film layer to the thickness h2 of the second positive electrode active material film layer within the above range, it is beneficial to controlling the thickness of the first positive electrode active material film layer and the overall thickness, and balancing the deintercalation speed of active ions in the two active material film layers and improving the stability of the positive electrode sheet, thereby improving the gram capacity and cycle performance of the positive electrode sheet.

In some optional embodiments, the thickness h1 of the first positive electrode active material film layer is 130 µm to 200 µm.

In some optional embodiments, the thickness h2 of the second positive electrode active material film layer is 50 µm to 170 µm.

According to the embodiments of the present application, by controlling the first positive electrode active material film layer to have an appropriate thickness h1 and the second positive electrode active material film layer to have an appropriate thickness h2, it is beneficial to balancing the deintercalation speed of active ions in the two active material film layers and improving the stability of the positive electrode sheet, thereby improving the gram capacity and cycle performance of the positive electrode sheet.

In some optional embodiments, a porosity of the first positive electrode active material film layer is greater than a porosity of the second positive electrode active material film layer.

In some optional embodiments, the porosity of the first positive electrode active material film layer is 26% to 50%.

In some optional embodiments, a compaction density of the first positive electrode active material film layer is 2.9 g/cm³ to 3.3g/cm³, and in some optional embodiments, a compaction density of the second positive electrode active material film layer is 3.2 g/cm³ to 3.7 g/cm³. In some optional embodiments, the compaction density of the first positive electrode active material film layer is less than the compaction density of the second positive electrode active material film layer.

According to the embodiments of the present application, by controlling the first positive electrode active material film layer and the second positive electrode active material film layer to have appropriate porosity and compaction density, it is beneficial to improving the electrochemical performance of the positive electrode sheet in the battery and improve the comprehensive performance of the battery.

In some optional embodiments, a gram capacity of the first positive electrode active material film layer is 225 mAh/g to 240 mAh/g. In some optional embodiments, a gram capacity of the second positive electrode active material film layer is 220 mAh/g to 235 mAh/g.

According to the embodiments of the present application, after the positive electrode sheet is detected to be subjected to charge-discharge cycles in a coin cell/battery cell, the ratio of the capacity of the first positive electrode active material film layer to the capacity of the second positive electrode active material film layer is within the above range, and the deintercalation speed of the active ions in the first positive electrode active material film layer and the second positive electrode active material film layer is balanced, which is beneficial to exerting the capacity of the positive electrode sheet and improving the utilization rate of the positive electrode active material.

In a second aspect, an embodiment of the present application provides a method for preparing a positive electrode sheet, including:
providing a second slurry including second positive electrode active material particles having a hollow structure;
coating a second slurry on a positive electrode current collector with the second slurry and forming a second positive electrode active material film layer;
providing a first slurry including first positive electrode active material particles, the first positive electrode active material particles being solid particles; and
coating the first slurry to form a first positive electrode active material film layer on a side of the second positive electrode active material film layer away from the positive electrode current collector, thereby preparing the positive electrode sheet.

According to the embodiments of the present application, the second slurry containing the second positive electrode active material particles is coated to the positive electrode current collector to form the second positive electrode active material film layer, and the first slurry containing the first positive electrode active material particles is coated, such that the first positive electrode active material film layer is formed on the side of the second positive electrode active material film layer away from the positive electrode current collector. Thus, in the positive electrode sheet including the embodiments of the present application, during the charging and discharging process of the battery, since the concentration of the active ions gradually decreases from the separator to the positive electrode sheet close to the positive electrode current collector during the mass transfer process of the electrolyte, the first positive electrode active material particles in the first positive electrode active material film layer are solid particles, and the deintercalation distance of the active ions in the first positive electrode active material film layer is relatively long (the mass transfer distance is relatively long). The second positive electrode active material film layer includes the second positive electrode active material particles having a hollow structure, and the second positive electrode active material particles having a hollow structure reduce the deintercalation distance (the mass transfer distance is relatively short) of the active ions in the second positive electrode active material film layer, which is beneficial to balancing the deintercalation speed of the active ions in the first positive electrode active material film layer and the second positive electrode active material film layer, and balancing the difference in the charge and discharge (SOC) speed of the active ions between the first positive electrode active material film layer and the second positive electrode active material film layer, which is beneficial to the exertion of the gram capacity of the positive electrode sheet.

According to the embodiments of the present application, the Li/Ni mixing ratio of the first positive electrode active material film layer and the second positive electrode active material film layer is within the above range, indicating that the first positive electrode active material film layer and the second positive electrode active material film layer obtained by the above arrangement balance the difference in the charge and discharge (SOC) speed of the active ions between the first positive electrode active material film layer and the second positive electrode active material film layer, thereby improving the gram capacity and cycle performance of the positive electrode sheet.

In some optional embodiments, the second slurry includes: a mixture of 60% to 90% of the second positive electrode active material particles and 10% to 40% of the third positive electrode active material particles in terms of mass percentage.

According to the embodiments of the present application, on the basis of balancing the deintercalation speed of the active ions of the first positive electrode active material film layer and the second positive electrode active material film layer, controlling the mass content of the second positive electrode active material particles and the mass content of the third positive electrode active material particles in the second positive electrode active material film layer takes into consideration the structural stability of the positive electrode sheet and the charging and discharging speed of the battery.

In a third aspect, an embodiment of the present application provides a battery cell, including the positive electrode sheet in the first aspect or the positive electrode sheet prepared by the method in the second aspect. According to the embodiments of the present application, the battery cell includes the positive electrode sheet described above, and therefore the battery has the beneficial effects of the positive electrode sheet described above.

In a fourth aspect, an embodiment of the present application provides a battery, including the battery cell in the third aspect. According to the embodiments of the present application, the battery includes the battery cell described above, and therefore the battery has the beneficial effects of the battery cell described above.

In a fifth aspect, an embodiment of the present application provides an electric device, including the battery in the fourth aspect. According to the embodiments of the present application, the electric device includes the battery described above, and therefore the electric device has the beneficial effects of the battery described above.

### BRIEF DESCRIPTION OF THE DRAWINGS

FIG. 1 is a microscopic schematic diagram of a hollow structure part of second positive electrode material particles according to an embodiment of the present application.
FIG. 2 is a schematic diagram of a battery cell according to an embodiment of the present application.
FIG. 3 is an exploded view of a battery cell shown in FIG. 2 according to an embodiment of the present application.
FIG. 4 is a schematic diagram of a battery module according to an embodiment of the present application.
FIG. 5 is a schematic diagram of a battery according to an embodiment of the present application.
FIG. 6 is an exploded view of the battery according to an embodiment of the present application shown in FIG. 5.
FIG. 7 is a schematic diagram of an electric device using a battery cell as a power supply according to an embodiment of the present application.

Description of reference signs:
1, battery; 2, upper box body; 3, lower box body; 4, battery module 5, battery cell; 51, housing; 52, electrode assembly; 53, top cover assembly.

The accompanying drawings of the present application are not necessarily drawn to scale.

### DETAILED DESCRIPTION OF PREFERRED EMBODIMENTS

Embodiments of a positive electrode sheet and a preparation method therefor, a battery cell, a battery, and an electric device of the present application are described below in detail with appropriate reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, "including" and "containing" may indicate further including or containing other components not listed, or only including or containing components listed.

In this application, the term "or" is inclusive, unless specifically stated otherwise. For example, the phrase "A or B" means "A, B, or both A and B". More specifically, either of the following conditions satisfies the condition "A or B": A is true (or present) and B is false (or absent); A is false (or absent) and B is true (or present); or both A and B are true (or present).

Unless specified otherwise, in the description of the present application, the terms "connected" and "connection" should be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

Unless otherwise specified, in the present application, the term "attached" means connected by means of adhesion, coating, or the like.

Unless otherwise specified, in the present application, terms "first", "second", and the like are used to distinguish different objects and are not intended to describe a particular order or primary/secondary relationship.

Unless otherwise specified, in the present application, the term "active ions" refers to ions that can be intercalated and deintercalated back and forth between a positive electrode and a negative electrode of the battery cell, including but not limited to lithium ions, sodium ions, and the like.

The terms "several" or "various" as used in the present application refer to two or more (including two). The terms "several items" or "a plurality of items" as used in the present application refer to two or more items (including two items).

In the related art, nickel-enriching ternary materials become one of hot positive electrode active materials for the battery cells due to high theoretical specific capacities, high discharge plateaus, and low costs. Therefore, the active material film layer of the positive electrode sheet is usually designed to be relatively thick, such that more positive electrode active materials can be accommodated, which is beneficial to improving the capacity and energy density of the battery.

As the thickness of the active material film layer of the positive electrode sheet reaches a certain degree, the capacity and energy density of the battery can only be improved to a limited extent, and the cycle performance of the battery deteriorates and the rate performance decreases.

After research and analysis, it is found that the battery performance may be deteriorated due to the phenomenon of unbalanced deintercalation of active ions on the surface of the active material film layer and the active material film layer close to the positive electrode current collector.

Further analysis shows that, during the charging and discharging process, the lithium-ion battery also causes continuous decomposition of the electrolyte at the interface of the positive and negative electrodes and phase change of the positive active material interface due to the presence of interfacial side reactions, thereby causing the loss of active Li and the increase of the impedance of the lithium-ion battery, resulting in the decrease of the performance of the positive electrode sheet in the battery. There is a need to develop a positive electrode sheet that has a high specific capacity, excellent cycle performance and rate performance, to meet an application need of a new generation electrochemical system.

Based on this, the present application provides a positive electrode sheet, which has a high gram capacity and cycle stability, and can effectively improve the energy density and cycle performance of a battery when applied to the battery.

The embodiments of the present application will be described below.

### Positive electrode sheet

In a first aspect, an embodiment of the present application provides a positive electrode sheet, including:
a positive electrode current collector;
a first positive electrode active material film layer disposed on at least one side of the positive electrode current collector, the first positive electrode active material film layer including solid first positive electrode active material particles; and
a second positive electrode active material film layer disposed between the first positive electrode active material film layer and the positive electrode current collector, the second positive electrode active material film layer including second positive electrode active material particles having a hollow structure.

The content of the solid first positive electrode active material particles in the first positive electrode active material film layer may be 75% to 100%, and it is not necessary that each first positive electrode active material particle is completely solid at 100% on a microscopic level.

In the embodiments of the present application, the solid first positive electrode active material particle refers to a particle that is completely composed of a substance, has no void, or has a void within a range that is difficult to be clearly detected. The solid first positive active material particles are relatively homogeneous throughout the particles, and there are no clearly detectable obvious voids as in the hollow structure.

In the embodiments of the present application, the solid first positive electrode active material particles may be polycrystalline particles having a relatively large average particle size. The polycrystalline particles are particles composed of a plurality of crystal particles. A crystal is a structure of atoms or molecules that are arranged in an orderly manner, whereas a polycrystal has many small crystal grains that may be arranged in different directions or angles. In general, the polycrystalline particles are large particles such as secondary particles. The secondary particles may be understood as particles after agglomeration of the positive electrode active material. In the present application, both the primary particles and the secondary particles are known in the art. Herein, the term "primary particles" refers to particles in a non-agglomerated state. The secondary particles refer to agglomerated particles formed by aggregating two or more primary particles. The primary particles and the secondary particles may be distinguished using a scanning electron microscope (SEM) image.

Herein, the particle sizes of the secondary particles may be tested by any means known in the art. As an example, after imaging is performed by using a scanning electron microscope at a magnification of 500, 200 to 600 secondary particles of the positive electrode active material that have a complete shape and are not shielded were randomly selected in an electron microscopic image thereof, and an average value of the longest diameters of the primary particles in the microscopic image is recorded as the average particle size D.

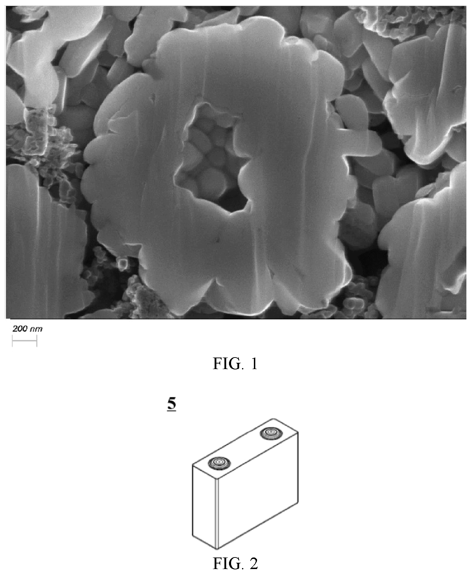

In the embodiments of the present application, the term "hollow" refers to a solid structure surrounded by an obvious shell and having a cavity inside. In the embodiments of the present application, the term "hollow structure" refers to a structure having a hollow portion or a central pore. The hollow structure is typically surrounded by a solid shell or wall, the interior being hollow. In the embodiments of the present application, the hollow structure may be composed of polycrystalline particles with a relatively large average particle size, or may be composed of polycrystalline particles with a relatively small average particle size relative to solid particles, which may be secondary particles. As an example, a micrograph of the second positive electrode active material particles is shown in FIG. 1.

According to the embodiments of the present application, the positive electrode sheet including the embodiments of the present application improves the discharge gram capacity and stability of the positive electrode sheet during the charging and discharging process of the battery, and shortens the charging time of the positive electrode sheet in the battery.

The reasons for the analysis may be: In the mass transfer process of the electrolyte, the concentration of the active ions gradually decreases from the separator to the position of the positive electrode sheet close to the positive electrode current collector, the first positive electrode active material particles in the first positive electrode active material film layer are solid particles, and the deintercalation distance of the active ions in the first positive electrode active material film layer is relatively long (the mass transfer distance is relatively long). The second positive electrode active material film layer includes the second positive electrode active material particles having a hollow structure, and the second positive electrode active material particles having a hollow structure reduce the deintercalation distance (the mass transfer distance is relatively short) of the active ions in the second positive electrode active material film layer, which is beneficial to balancing the deintercalation speed of the active ions in the first positive electrode active material film layer and the second positive electrode active material film layer, respectively, and balances the difference in the charge and discharge (SOC) speed of the active ions between the first positive electrode active material film layer and the second positive electrode active material film layer.

In addition, the second positive active material particle has a hollow structure, which is beneficial to the presence of the second positive active material particle in the positive electrode sheet, dispersing the stress of the positive electrode sheet during the cycle process, and improving the cycle stability of the positive electrode sheet, which is beneficial to further improving the cycle performance of the battery, thereby reducing the breakage of the positive electrode active particles, improving the interface performance, and improving the problem of overpressure cracking and brittleness of the positive electrode sheet.

In some embodiments, the first positive electrode active material particles and the second positive electrode active material particles are respectively nickel-containing positive electrode active particles.

In the related art, when nickel-containing positive electrode active particles are applied to a battery, such as a lithium battery, for example, the radius of Ni²⁺ ion is similar to the radius of Li⁺, the phenomenon of cation mixing will seriously occur, such that the electrochemical performance of the lithium-containing ternary positive electrode active material is deteriorated, especially in a high-nickel system, the cation mixing tendency increases, and the cycle performance of the battery is deteriorated.

According to the embodiments of the present application, the first positive electrode active material film layer includes solid first positive electrode active material particles, and the second positive electrode active material film layer includes hollow particles, which improves the discharge gram capacity and stability of the positive electrode sheet, and improves the cycle performance of the positive electrode sheet in the battery. The reasons for the analysis may be: The distance of the lithium ions for transferring protons is shortened, the lithium ion concentration of the first positive electrode active material film layer is high, but the solid phase mass transfer distance of the lithium ion is longer, and the lithium ion concentration of the second positive electrode active material film layer is low, but the solid phase mass transfer time is shorter, which balances the difference of active lithium ion deintercalation and intercalation between the active material particles in the positive electrode sheet, is beneficial to exerting the gram capacity of the positive electrode sheet, thereby improving the utilization rate of the active material particles in the positive electrode sheet.

In some optional embodiments, an average particle size DV¹50 of the first positive electrode active material particles is greater than or equal to an average particle size Dv²50 of the second positive electrode active material particles.

According to the embodiments of the present application, the ratio of the average particle size Dv¹50 of the first positive electrode active material particles to the average particle size Dv²50 of the second positive electrode active material particles is within the above range, which is beneficial to increasing the mass transfer distance of the first positive electrode active material particles in the first positive electrode active material film layer and reduce the mass transfer distance of the second positive electrode active material particles in the second positive electrode active material film layer, thereby coping with the phenomenon that the concentration of active ions in the first positive electrode active material film layer is relatively high and the concentration of active ions in the second positive electrode active material film layer is relatively low, and balancing the deintercalation speed of active ions of the two layers, thereby improving the gram capacity and cycle performance of the positive electrode sheet.

In addition, the relatively large average particle size Dv¹50 of the first positive electrode active material particles is beneficial to increasing the porosity of the first positive electrode active material film layer, and thus is beneficial to the presence of the first positive electrode active material particles in the positive electrode sheet, thereby dispersing the stress of the first positive electrode active material particles in the positive electrode sheet during the cycle process, and improving the cycle stability of the positive electrode sheet, which is beneficial to further improving the cycle performance of the battery.

In some optional embodiments, an average particle size Dv¹50 of the first positive electrode active material particles is 8 µm to 18 µm, optionally, 8 µm to 12 µm.

Optionally, the average particle size Dv¹50 of the first positive electrode active material particles may be any value of 8 µm, 9 µm, 10 µm, 11 µm, 12 µm, 13 µm, 14 µm, 15 µm, 16 µm, 17 µm, and 18 µm or a range composed thereby.

According to the embodiments of the present application, the average particle size Dv¹50 of the first positive electrode active material particles within the above range is beneficial to increasing the mass transfer distance of the first positive electrode active material particles in the first positive electrode active material film layer, thereby coping with the phenomenon that the concentration of active ions in the first positive electrode active material film layer is relatively high and the concentration of active ions in the second positive electrode active material film layer is relatively low, and balancing the deintercalation speed of active ions of the two layers, thereby improving the gram capacity and cycle performance of the positive electrode sheet.

In some optional embodiments, an average particle size Dv²50 of the second positive electrode active material particles is 2 µm to 10 µm, optionally 3 µm to 8 µm.

Optionally, the average particle size Dv²50 of the second positive electrode active material particles may be any value of 2 µm, 3 µm, 4 µm, 5 µm, 6 µm, 7 µm, 8 µm, 9 µm, and 10 µm or a range composed thereby.

According to the embodiments of the present application, the average particle size Dv²50 of the second positive electrode active material particles within the above range is beneficial to reducing the mass transfer distance of the second positive electrode active material particles in the second positive electrode active material film layer, thereby coping with the phenomenon that the concentration of active ions in the first positive electrode active material film layer is relatively high and the concentration of active ions in the second positive electrode active material film layer is relatively low, and balancing the deintercalation speed of active ions of the two layers, thereby improving the gram capacity and cycle performance of the positive electrode sheet.

In some optional embodiments, a particle size distribution span of the first positive electrode active material particles is 0.3 to 0.7.

Optionally, the particle size distribution span of the first positive electrode active material particles may be any value of 0.3, 0.35, 0.4, 0.45, 0.5, 0.55, 0.6, 0.65, 0.7 or a range composed thereby.

According to the embodiments of the present application, the particle size distribution span of the first positive electrode active material particles is within the above range, which can improve the compaction density of the material, improve the discharge capacity of the battery, and balance the active ion deintercalation speed of the two layers, thereby improving the gram capacity and cycle performance of the positive electrode sheet.

In some optional embodiments, a particle size distribution span of the second positive electrode active material particles is 0.9 to 1.3.

Optionally, the particle size distribution span of the second positive electrode active material particles may be any value of 0.9, 0.95, 1.0, 1.05, 1.10, 1.15, 1.20, 1.25, 1.30 or a range composed thereby.

According to the embodiments of the present application, the particle size distribution span of the second positive active material particles within the above range can increase the compaction density of the material, can increase the discharge capacity of the battery, and balance the active ion deintercalation speed of the two layers, thereby improving the gram capacity and cycle performance of the positive electrode sheet.

In any embodiment of the present application, the calculation method of the particle size distribution span (SPAN) is (Dv90-Dv10)/Dv50, which represents the particle distribution of the positive electrode active material, where Dᵥ50 represents the particle size of the positive electrode active material in the volume-based particle size distribution, from the small particle size side to the cumulative volume of 50%; Dv10 represents a particle size of the positive electrode active material in the volume-based particle size distribution, from the small particle size side to the cumulative volume of 10%; Dv90 represents a particle size of the positive electrode active material in the volume-based particle size distribution, from the small particle size side to the cumulative volume of 90%.

In the present application, the volume average particle size Dᵥ50, Dv10, and Dv90/particle size distribution span (Dᵥ90-Dᵥ10)/Dᵥ50 of the negative electrode active material are all well-known in the art, and can be determined by instruments and methods known in the art. For example, the volume distribution particle size can be determined using a laser particle size analyzer (e.g., Malvern Master Size 3000) with reference to GB/T 19077-2016 "Particle Size Distribution-Laser Diffraction Method".

In some optional embodiments, an inner diameter d1 of the hollow structure is 0.6 µm to 5 µm, optionally 0.9 µm to 4 µm.

Optionally, the inner diameter d1 of the hollow structure may be any value of 0.6 µm, 0.7 µm, 0.8 µm, 0.9 µm, 1.0 µm, 1.5 µm, 2 µm, 2.5 µm, 3 µm, 3.5 µm, 4 µm, 4.5 µm, 5 µm, or a range composed thereby. In the embodiments of the present application, the term "inner diameter of the hollow structure" refers to the longest diameter of the circular or quasi-circular cross section of the internal cavity of the second positive electrode active material particle (positive electrode active material).

According to the embodiments of the present application, the second positive electrode active material particles have the hollow structure, which can buffer a volume change of the positive electrode active material during charging and discharging, thereby stabilizing the structure and improving the cycle performance. On the other hand, the second positive electrode active material particles have more three dimensional pores, which expands the contact area between the material and the electrolyte, and shortens the migration distance of lithium ions, thereby improving the speed of active ions in the second positive electrode active material film layer, which is beneficial to reducing the internal resistance of the battery, and the battery has excellent rate performance. Meanwhile, the second positive active material particles have a hollow structure, and thus have more active sites for lithium ions, which improves the gram capacity of the material, improves the gram capacity of the positive electrode sheet, and improves the energy density of the battery.

The inner diameter of a hollow structure can be tested by any means known in the art. As an example, a conductive adhesive was attached to a sample stage, a powdery sample of the positive electrode active material was spread on the conductive adhesive, non-adhered powder was blown off with an ear washing ball, gold was sprayed, and a cross section of a particle of the powdery sample was cut using argon plasma. A scanning electron microscope was used to obtain a scanning electron microscope photo of the powdery sample under conditions of an acceleration voltage of 10 kV and an emission current of 10 mA. The inner diameter size of the pores is measured according to the scanning electron microscope photograph. At least three samples are measured, data of at least 50 pores is measured for each sample, and a number-average value is taken as the inner diameter size of the pores of the sample.

In some optional embodiments, a wall thickness d2 of the outer wall of the hollow structure is 0.6 µm to 10 µm, optionally 0.9 µm to 7 µm.

Optionally, the wall thickness d2 of the outer wall of the hollow structure may be any value of 0.6 µm, 0.7 µm, 0.8 µm, 0.9 µm, 1.0 µm, 1.5 µm, 2.0 µm, 2.5 µm, 3 µm, 4 µm, 5 µm, 6 µm, 7 µm, 8 µm, 9 µm, and 10 µm or a range composed thereby.

In the embodiments of the present application, the wall thickness d2 of the outer wall of the hollow structure is controlled within an appropriate range, which can improve the structural stability of the hollow structure, improve the gram capacity of the material in the positive electrode sheet, improve the energy density, rate performance and cycle performance of the battery, and comprehensively improve the electrochemical performance of the battery.

Herein, the term "outer wall thickness of the hollow structure" refers to the thickness of the outer shell layer of the hollow structure (second positive active material particles).

The outer wall thickness of the hollow structure can be tested by any means known in the art. As an example, a conductive adhesive is attached to a sample stage, a powdery sample of the positive electrode active material is spread on the conductive adhesive, non-adhered powder is blown off with an ear washing ball, gold is sprayed, and a cross section of a particle of the powdery sample is cut using argon plasma. A scanning electron microscope was used to obtain a scanning electron microscope photo of the powdery sample under conditions of an acceleration voltage of 10 kV and an emission current of 10 mA. The outer wall thickness of the hollow structure is measured according to the scanning electron microscope photograph. At least three samples are measured, data of at least 50 pores is measured for each sample, and an average value of the data is taken as the inner diameter thickness of the hollow structure of the sample.

Dv²50 of the second positive active material particles, the inner diameter d1 and the outer wall thickness d2 of the hollow structure are important parameters of the hollow structure/second positive active material particles, which affect the structural properties of the material. When Dv²50 of the second positive active material particle, the inner diameter d1 of the hollow structure and the thickness d2 of the outer wall are within the appropriate ranges, the material has more active sites of lithium ions, the gram capacity of the material is improved, thereby improving the gram capacity of the material, and the structural stability of the material can be improved, when the material is applied to a lithium battery for charge-discharge cycles, the lithium-nickel mixing phenomenon is effectively improved, the migration rate of lithium ions and electrons is significantly improved, which is beneficial to balancing the deintercalation speed of active ions in the positive electrode sheet of the battery, thereby improving the stability of the battery.

In some optional embodiments, a specific surface area of the first positive electrode active material is 0.1 m²/g to 0.5 m²/g, optionally, 0.2 m²/g to 0.3 m²/g.

Optionally, the specific surface area of the first positive electrode active material particles may be any value of 0.1 m²/g, 0.15 m²/g, 0.2 m²/g, 0.25 m²/g, 0.3 m²/g, 0.35 m²/g, 0.4 m²/g, 0.45 m²/g, and 0.5 m²/g, or a range composed thereby.

In some embodiments, a specific surface area of the second positive electrode active material is 0.35 m²/g to 0.8 m²/g, optionally, 0.4 m²/g to 0.6 m²/g.

Optionally, the specific surface area of the second positive electrode active material particles may be any value of 0.4 m²/g, 0.45 m²/g, 0.5 m²/g, 0.55 m²/g, 0.6 m²/g, 0.65 m²/g, 0.7 m²/g, 0.75 m²/g, and 0.8 m²/g, or a range composed thereby.

The specific surface area of the first positive electrode active material particles and the second positive electrode active material particles is a well-known meaning in the art and can be determined by instruments and methods well known in the art, for example, using the nitrogen adsorption specific surface area analytical test method, and calculated by a Brunauer Emmett Teller (BET) method, where the nitrogen adsorption specific surface area analytical test can be performed by a Tri Star II specific surface and pore analyzer from Micromeritics, USA.

According to the embodiments of the present application, the specific surface area of the first positive electrode active material particles and the specific surface area of the second positive electrode active material particles are within the above ranges, respectively, indicating that the first positive electrode active material film layer can accommodate more active ions, and the second positive electrode active material film layer can accommodate relatively less active ions, which is beneficial to balancing the active ion deintercalation speeds of the two layers, thereby improving the gram capacity and cycle performance of the positive electrode sheet.

In some optional embodiments, a tap density of the first positive electrode active material particles is 1.8 g/cm³ to 4 g/cm³, optionally 2 g/cm³ to 3 g/cm³.

Optionally, the tap density of the first positive electrode active material particles may be any value of 1.8 g/cm³, 1.85 g/cm³, 1.9 g/cm³, 1.95 g/cm³, 2.0 g/cm³, 2.05 g/cm³, 2.1 g/cm³, 2.15 g/cm³, 2.2 g/cm³, 2.25 g/cm³, 2.3 g/cm³, 2.35 g/cm³, 2.4 g/cm³, 2.45 g/cm³, 2.5 g/cm³, 2.55 g/cm³, 2.6 g/cm³, 2.65 g/cm³, 2.7 g/cm³, 2.75 g/cm³, 2.8 g/cm³, 2.85 g/cm³, 2.9 g/cm³, 2.95 g/cm³, 3.0 g/cm³, 3.05 g/cm³, 3.1 g/cm³, 3.15 g/cm³, 3.2 g/cm³, 3.25 g / cm³, 3.3 g/cm³, 3.35 g/cm³, 3.4 g/cm³, 3.45 g/cm³, 3.5 g/cm³, 3.55 g/cm³, 3.6 g/cm³, 3.65 g / cm3, 3.7 g/cm³, 3.75 g/cm³, 3.8 g/cm³, 3.85 g/cm³, 3.9 g/cm³, 3.95 g/cm³, and 4 g/cm³ or a range composed thereby.

In some optional embodiments, the tap density of the second positive electrode active material particles is 1.3 g/cm³ to 2.6 g/cm³, optionally 1.5 g/cm³ to 1.8 g/cm³.

Optionally, the tap density of the second positive electrode active material particles may be any value of 1.3 g/cm³, 1.35 g/cm³, 1.4 g/cm³, 1.45 g/cm³, 1.5 g/cm³, 1.55 g/cm³, 1.6 g/cm³, 1.65 g/cm³, 1.7 g/cm³, 1.75 g/cm³, 1.8 g/cm³, 1.85 g/cm³, 1.9 g/cm³, 1.95 g/cm³, 2.0 g/cm³, 2.05 g/cm³, 2.1 g/cm³, 2.15 g/cm³, 2.2 g/cm³, 2.25 g/cm³, 2.3 g/cm³, 2.35 g/cm³, 2.4 g/cm³, 2.45 g/cm³, 2.5 g/cm³, 2.55 g/cm³, and 2.6 g/cm³ or a range composed thereby.

According to the embodiments of the present application, the specific surface area of the first positive electrode active material particles and the tap density of the second positive electrode active material particles are respectively within the above ranges, indicating that the first positive electrode active material film layer can accommodate more active ions, and the second positive electrode active material film layer can accommodate relatively less active ions, which is beneficial to balancing the active ion deintercalation speeds of the two layers, thereby improving the gram capacity and cycle performance of the positive electrode sheet.

The tap density of the first positive electrode active material particle and the second positive electrode active material particle can be measured by instruments and methods well known in the art, for example, conveniently measured by a tap density measuring instrument, such as a FZS4-4B type tap density measuring instrument.

In some optional embodiments, the second positive electrode active material film layer includes third positive electrode active material particles, and a ratio of an average particle size D_{V}²50 of the second positive electrode active material particles to an average particle size D_{V}³50 of the third positive electrode active material particles is (1.5-9): 1.

In the embodiments of the present application, the third positive electrode active material particles may be particles having a smaller average particle size than the second positive electrode active material particles. The third positive electrode active material particles may be single crystal particles. The single crystal particles refers to particles having a completely uniform crystal structure, and atoms, molecules or ions in the entire particle are orderly arranged in the same direction, and there are no grain boundaries or other types of crystal defects. The third cathode active material particle may be a primary particle.

The primary particle generally refers to the most basic particle unit in a multi-particle system, and the primary particle may be a minute particle or a cluster of particles. The term "primary particles" refer to particles of the positive electrode active material before agglomeration.

The particle size of the primary particles of the positive electrode active material may be tested by any means known in the art. As an example, after imaging is performed by using a scanning electron microscope at a magnification of 500, 200 to 600 primary particles of the positive electrode active material that have a complete shape and are not shielded were randomly selected in an electron microscopic image thereof, and an average value of the longest diameters of the primary particles in the microscopic image is recorded as the average particle size D.

In this embodiment of the present application, the ratio of the average particle size D_{V}²50 of the second positive electrode active material particles to the average particle size D_{V}³50 of the third positive electrode active material particles is controlled within the above range, and the third positive electrode active material particles match the second positive electrode active material particles, which is beneficial to increasing the mass transfer distance of the second positive electrode active material film layer, increasing the deintercalation speed of active ions in the second positive electrode active material film layer, balancing the difference (SOC difference) between the charging and discharging speeds of the first active material film layer and the second active material film layer, and facilitating the exertion of the gram capacity.

In some optional embodiments, the average particle size D_{V}³50 of the positive electrode active material particles is 0.8 µm to 5 µm, optionally, 2 µm to 5 µm.

According to the embodiments of the present application, when the average particle size D_{V}³50 of the third positive electrode active material particles is within the above range, the particle size is relatively small, and the anisotropy is smaller, in this case, the volume expansion rate of the third positive electrode active material particles in the battery with charging and discharging is lower, such that the cycle stability of the third positive electrode active material particles is better, the overall cycle stability of the positive electrode sheet can be further improved, and the cycle performance of the battery can be further improved.

In some embodiments, a specific surface area of the third positive electrode active material particles is 0.4 m²/g to 0.9 m²/g, optionally, 0.6 m²/g to 0.8 m²/g.

According to the embodiments of the present application, the specific surface area of the third positive electrode active material particle is within the above range, which is beneficial to controlling the specific surface area and the compaction density of the second positive electrode active material film layer, improving the cycle stability of the positive electrode sheet, and further improving the cycle performance of the battery.

The specific surface area of the first positive electrode active material particles, the second positive electrode active material particles, and the third positive electrode active material particles may be tested by any means known in the art. As an example, reference can be made to GB/T 19587-2017 "Determination of the Specific Surface Area of Solids by Gas Adsorption Using the BET Method". The measurement was carried out using an apparatus TriStar II 3020. The positive electrode active material was dispersed in a dispersing agent (ethanol); after 30 minutes of sonication, the resulting material was dried in a vacuum drying oven; and finally, the specific surface area of the positive electrode active material was measured using a specific surface area tester.

The larger the specific surface areas of the first positive electrode active material particles, the second positive electrode active material particles and the third positive electrode active material particles are, the more active sites in the positive electrode active material are, the faster the exchange speed of the positive electrode active material with electrons is, and the better the dynamic performance of the battery is, but too many active sites will increase the side reaction between the positive electrode active material and the electrolyte and deteriorate the cycle performance of the battery, while too few active sites will cause the chemical reaction in the battery system to decline, resulting in the deterioration of the battery capacity and cycle performance.

By controlling specific surface area of the first positive electrode active material particles, the second positive electrode active material particles, and the third positive electrode active material particles within an appropriate range, the battery has high discharge capacity and energy density as well as excellent rate performance and cycle performance, and the electrochemical performance of the battery is comprehensively improved.

In some optional embodiments, a tap density of the third positive electrode active material particles is 1.8 g/cm³ to 3.4 g/cm³, and optionally 2 g/cm³ to 2.2 g/cm³.

According to the embodiments of the present application, the tap density of the third positive electrode active material particle is within the above range, which is beneficial to controlling the compaction density of the second positive electrode active material film layer, improving the cycle stability of the positive electrode sheet, and further improving the cycle performance of the battery.

In some optional embodiments, the third positive electrode active material particles are one or more of particles having a hollow structure and solid particles.

In some optional embodiments, a particle size distribution span of the third positive electrode active material particles is 0.8 to 1.5.

According to the embodiments of the present application, the particle size distribution span of the third positive electrode active material particles is within the above range, which is beneficial to improving the compaction density of the second active material film layer, balancing the active ion deintercalation speed of the two layers, and improving the stability of the positive electrode sheet, thereby improving the gram capacity and cycle performance of the positive electrode sheet.

Dv50 of the first positive electrode active material particles, the second positive electrode active material particles, and the third positive electrode active material particles has a meaning well known in the art, that is, the particle size corresponding to 50% of the cumulative particle size distribution on a volume basis can be detected by a known method. For example, the particle size distribution is measured using a laser diffraction particle size distribution measuring instrument (Malvern Mastersizer 3000) in accordance with the particle size distribution laser diffraction method GB/T19077-2016 to obtain Dv50. Dv10 represents a particle size of the positive electrode active material in the volume-based particle size distribution, from the small particle size side to the cumulative volume of 10%; Dv90 represents a particle size of the positive electrode active material in the volume-based particle size distribution, from the small particle size side to the cumulative volume of 90%. As an example, the particle size distribution can be measured by a laser diffraction method with reference to GB/T 19077-2016/ISO 13320:2009, using the device Malvern 3000.

The particle size distribution span (SPAN) of the first positive electrode active material particles, the second positive electrode active material particles, and the third positive electrode active material particles has a meaning well known in the art, and the calculation method of the particle size distribution span (SPAN) is (Dv90-Dv10)/Dv50, which represents the particle distribution of the positive electrode active material, where Dᵥ50 represents the particle size of the positive electrode active material in the volume-based particle size distribution, from the small particle size side to the cumulative volume of 50%; Dv10 represents a particle size of the positive electrode active material in the volume-based particle size distribution, from the small particle size side to the cumulative volume of 10%; Dv90 represents a particle size of the positive electrode active material in the volume-based particle size distribution, from the small particle size side to the cumulative volume of 90%.

According to the above definition, the values of Dv50, Dv10 and Dv90 of the positive electrode active material are measured with reference to the method specified in GB/T19077-2016, and then the SPAN of the positive electrode active material is calculated. In any embodiment of the present application, the term "positive electrode active material" can include one or more of the first positive electrode active material particles, the second positive electrode active material particles, and the third positive electrode active material particles.

The SPAN is maintained in a wide range, which can increase the compaction density of the material and can increase the discharge capacity of the battery.

In some optional embodiments, a ratio of the thickness h1 of the first positive electrode active material film layer to the thickness h2 of the second positive electrode active material film layer is 10: (5 to 23.5).

Optionally, the ratio of the thickness h1 of the first positive electrode active material film layer to the thickness h2 of the second positive electrode active material film layer may be any value of 10:5, 10:5.5, 10:6, 10:6.5, 10:7, 10:7.5, 10:8, 10:8.5, 10:9, 10:9.5, 10:10, 10:10.5, 10:11, 10:11.5, 10:12, 10:12.5, 10:13, 10:13.5, 10:14, 10:14.5, 10:15, 10:15.5, 10:16, 10:16.5, 10:17, 10:17.5, 10:18, 10:18.5, 10:19, 10:19.5, 10:20, 10:20.5, 10:21, 10:21.5, 10:22, 10:22.5, 10:23, 10:23.5 or a range composed thereby.

According to the embodiments of the present application, by controlling the ratio of the thickness h1 of the first positive electrode active material film layer to the thickness h2 of the second positive electrode active material film layer within the above range, it is beneficial to balancing the deintercalation speed of active ions in the two active material film layers and improving the stability of the positive electrode sheet, thereby improving the gram capacity and cycle performance of the positive electrode sheet.

In some optional embodiments, the thickness h1 of the first positive electrode active material film layer is 130 µm to 200 µm.

Optionally, the thickness h1 of the first positive electrode active material film layer may be any value of 130 µm, 135 µm, 140 µm, 145 µm, 150 µm, 155 µm, 160 µm, 165 µm, 170 µm, 175 µm, 180 µm, 185 µm, 190 µm, 195 µm, and 200 µm or a range composed thereby.

In some optional embodiments, the thickness h2 of the second positive electrode active material film layer is 50 µm to 170 µm.

Optionally, the thickness h2 of the second positive electrode active material film layer may be any value of 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, 150 µm, 155 µm, 160 µm, 165 µm, and 170 µm or a range composed thereby.

The thickness h1 of the first positive electrode active material film layer and the thickness h2 of the second positive electrode active material film layer can be detected by a detection method commonly used in the art. The positive electrode sheet is cut in the thickness direction and polished to obtain a smooth cross section. The thickness h1 of the first positive electrode active material film layer and the thickness h2 of the second positive electrode active material film layer of the positive electrode sheet are measured by a scanning electron microscope, at least three samples are measured, at least 50 data is measured for each sample, and the average value of the data is taken as the thickness h1 of the first positive electrode active material film layer and the thickness h2 of the second positive electrode active material film layer of the sample.

In some optional embodiments, a ratio of the thickness h1 of the first positive electrode active material film layer to a sum of masses of the first positive electrode active material film layer and the second positive electrode active material film layer is 1.2 µm/g to 2 µm/g.

Optionally, the ratio of the thickness h1 of the first positive electrode active material film layer to the sum of the mass of the first positive electrode active material film layer and the mass of the second positive electrode active material film layer may be any value of 1.2 µm/g, 1.3 µm/g, 1.4 µm/g, 1.5 µm/g, 1.6 µm/g, 1.7 µm/g, 1.8 µm/g, 1.9 µm/g, and 2.0 µm/g, or a range composed thereby.

According to the embodiments of the present application, controlling the ratio of the thickness h1 of the first positive electrode active material film layer to the sum of the mass of the first positive electrode active material film layer and the mass of the second positive electrode active material film layer to be within the above range is beneficial to controlling and balancing the deintercalation speed of active ions in the first positive electrode active material film layer and the second positive electrode active material film layer, and is beneficial to exerting the capacity of the positive electrode sheet, thereby facilitating the cycle performance of the battery.

The thickness h1 of the first positive electrode active material film layer and the sum of the masses of the first positive electrode active material film layer and the second positive electrode active material film layer may be detected by a common method in the art. The prepared positive electrode sheet can be weighed, the mass of the positive electrode sheet is M, the first positive electrode active material film layer and the second positive electrode active material film layer in the positive electrode sheet are removed in an organic solvent such as ethanol or acetone to obtain a smooth positive electrode current collector, the organic solvent is removed, the mass of the positive electrode current collector is M1, and the sum of the thickness h1 of the first positive electrode active material film layer and the mass of the first positive electrode active material film layer and the second positive electrode active material film layer=M-M1. At least three positive electrode sheet samples can be measured, at least 50 data are measured for each sample, and the average value of the data is taken.

In some optional embodiments, a porosity of the first positive electrode active material film layer is greater than a porosity of the second positive electrode active material film layer; optionally, the porosity of the first positive electrode active material film layer is 26% to 50%; and optionally, the porosity of the second positive electrode active material film layer is 30% to 40%.

Herein, the "porosity" refers to a ratio of a pore volume in the first positive electrode active material film layer to a total volume of the first positive electrode active material film layer or a ratio of a pore volume in the second positive electrode active material film layer to a total volume of the second positive electrode active material film layer.

The porosity of the first positive electrode active material film layer and the porosity of the second positive electrode active material film layer can be tested using any means known in the art. In an example, the measurement was carried out by using a gas displacement method according to GB/T24586. Porosity=(V1-V2)/V1×100%, where V1 is the apparent volume of the sample and V2 is the true volume of the sample.

In some optional embodiments, a compaction density of the first positive electrode active material film layer is less than a compaction density of the second positive electrode active material film layer. Optionally, the compaction density of the first positive electrode active material film layer is 2.9 g/cm³ to 3.3 g/cm³, and optionally, the compaction density of the second positive electrode active material film layer is 3.2 g/cm³ to 3.7 g/cm³.

The compaction density of the first positive electrode active material film layer and the compaction density of the second positive electrode active material film layer can be measured by instruments and methods well known in the art, for example, conveniently measured by an electronic pressure tester, such as a UTM7305 type electronic pressure tester. The compaction density of the positive electrode sheet can be calculated by the formula PD=M/(d×A), where M is the mass of a small wafer with a diameter of 40 mm, and can be obtained by averaging 10 times of weighing; D is the thickness of the positive electrode sheet after cold pressing, and the value can be obtained by cutting into small wafers with a diameter of 40 mm and measuring the thickness respectively and averaging; A is the area of the 40 mm small wafer.

In some optional embodiments, a ratio of the capacity of the first positive electrode active material film layer to the capacity of the second positive electrode active material film layer satisfies 1: (0.9-1.05); optionally, the gram capacity of the first positive electrode active material film layer is 225 mAh/g to 240 mAh/g; optionally, the gram capacity of the second positive electrode active material film layer is 220 mAh/g to 235 mAh/g.

Optionally, the ratio of the capacity of the first positive electrode active material film layer to the capacity of the second positive electrode active material film layer can be any value in 1:0.9,1:1.0,1:1.01,1:1.02,1:1.03,1:1.04,1:1.05 or a range composed thereby.

According to the embodiments of the present application, after the positive electrode sheet is detected to be subjected to charge-discharge cycles in a coin cell/battery cell, the ratio of the capacity of the first positive electrode active material film layer to the capacity of the second positive electrode active material film layer is within the above range, and the deintercalation speed of the active ions in the first positive electrode active material film layer and the second positive electrode active material film layer is balanced, which is beneficial to exerting the capacity of the positive electrode sheet and improving the utilization rate of the positive electrode active material.

The gram capacity of the first positive electrode active material film layer and the gram capacity of the second positive electrode active material film layer can be tested using any means known in the art. As an example, a fresh positive electrode sheet can be sampled to prepare a button cell battery. By using a lithium sheet as a negative electrode, and the button cell battery is charged at a constant current of 0.02C rate to a voltage of 3.5 V, then charged at a constant current of 0.1C rate to a voltage of 4.3 V, and then charged at a constant voltage of 4.3 V until the current drops to 0.05C at 25 °C in a normal pressure environment, and a specific charge capacity at this time is recorded as an initial lithium deintercalation capacity. The button cell battery is discharged at a constant current of 0.1C rate to a voltage of 2.5 V, and a specific discharge capacity at this time is recorded as an initial lithium intercalation capacity. Then, another group of fresh positive electrode sheets are used. The positive electrode sheets from which the first positive electrode active material film layers have been peeled off are used to prepare a button cell battery, and a lithium sheet is used as a negative electrode for detection, and a specific charge capacity at this time is recorded as an initial lithium intercalation capacity. As another example, the battery dissembled from the battery can also be used to respectively obtain the first powder material of the first positive electrode active material film layer and the second powder material of the second positive electrode active material film layer. The first powder and the second powder are prepared into a fresh positive electrode sheet including the first positive electrode active material film layer and the second positive electrode active material film layer for detection.

In some optional embodiments, the first positive electrode active material particles and the second positive electrode active material particles respectively include the following structural formulas: LiₐNiₓCo_{y}M_{1-x-y}O₂, where M includes one or more of Mn, Al, B, Zr, Sr, Y, Sb, W, Ti, Mg, Nb, and Ba, 0.55≤x≤1.05, 0≤y≤0.45, and 0.8≤a≤1.2.

In some embodiments, in LiₐNiₓCo_{y}M_{1-x-y}O₂, a is any value of 0.8, 0.9, 1.0, 1.01, 1.02, 1.03, 1.04, and 1.05, or a range composed of any two values therein.

In some embodiments, in LiₐNiₓCo_{y}M_{1-x-y}O₂, x is any value of 0.55, 0.6, 0.7, 0.8, 0.9, 0.95, and 0.995, or a range composed of any two values therein.

In some embodiments, in LiₐNiₓCo_{y}M_{1-x-y}O₂, y is any value of 0, 0.1, 0.2, 0.3, 0.4, and 0.45, or a range composed of any two values therein.

In some embodiments, in the chemical formula LiₐNiₓCo_{y}M_{1-x-y}O₂, 0.90≤x≤1.0, 0≤y≤0.1, and 0.8≤a≤1.2.

In some embodiments, in the chemical formula LiₐNiₓCo_{y}M_{1-x-y}O₂, 0.95≤x≤0.995, 0≤y≤0.05, and 0.8≤a≤1.2.

In some embodiments, in LiₐNiₓCo_{y}Mn_{1-x-y}O₂, 0.95≤x≤0.995, 0≤y≤0.05, and 0.8≤a≤1.2.

In some embodiments, in LiₐNiₓCo_{y}Sb_{1-x-y}O₂, 0.95≤x≤0.995, 0≤y≤0.05, and 0.8≤a≤1.2.

In some embodiments, in LiₐNiₓCo_{y}O₂, 0.95≤x≤0.995, 0.005≤y≤0.05, x+y=1, and 0.8≤a≤1.2.

According to the embodiments of the present application, the use of the above materials can ensure a high gram capacity of the positive electrode active material, such that the gram capacity of the positive electrode sheet is improved, and a battery has a high discharge capacity and energy density.

In some optional embodiments, the third positive active material particles include the following structural formulas: LiₐNiₓCo_{y}M_{1-x-y}O₂, where M includes one or more of Mn, Al, B, Zr, Sr, Y, Sb, W, Ti, Mg, Nb, and Ba, 0.55≤x≤1.05, 0≤y≤0.45, and 0.8≤a≤1.2.

According to the embodiments of the present application, the use of the above materials can ensure a high gram capacity of the positive electrode active material, such that the gram capacity of the positive electrode sheet is improved, and a battery has a high discharge capacity and energy density.

In some optional embodiments, the first positive electrode active material particles, the second positive electrode active material particles, and the third positive electrode active material particles respectively include any one or more of LiNi_{0.96}Co_{0.02}Mn_{0.01}Ba_{0.01}O₂, LiNi_{0.97}Co_{0.01}Mn_{0.01}Ba_{0.01}O₂, and LiNi_{0.98}Co_{0.01}Mn_{0.005}Ba_{0.005}O₂. The above positive electrode active material can better balance the charging and discharging speed of the positive electrode sheet in the battery, balance the average of the charging and discharging efficiency of the surface and the side close to the positive electrode current collector, and improve the gram capacity of the positive electrode sheet, such that the battery has high discharge capacity and energy density.

In some embodiments, the positive electrode sheet includes a positive electrode current collector and a positive electrode active material film layer disposed on at least one surface of the positive electrode current collector, and the positive electrode active material film layer includes positive electrode active material particles.

As an example, the positive electrode current collector has two surfaces opposed in its own thickness direction, and the positive electrode material film layer is provided on either one or both of the two opposed surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the first positive electrode active material particles, the second positive electrode active material particles, and the third positive electrode active material particles can be a positive electrode active material for a battery known in the art. As an example, the positive active material may comprise at least one of the following materials: an olivine-structured lithium-containing phosphate, a lithium transition metal oxide, and respective modified compounds thereof. However, the present application is not limited to these materials, and other conventional materials that can be used as a positive active material of a battery may also be used. These positive active materials may be used alone or in combination of two or more thereof. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

In some embodiments, the positive electrode active material film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode sheet may further be prepared by the following method: The components for preparing the positive electrode sheet, such as the positive electrode active material, the conductive agent, the binder, and any other components are dispersed in a solvent, such as N-methylpyrrolidone to form a positive electrode slurry; and then, the positive electrode slurry is coated on the positive electrode current collector. After processes such as drying and cold-pressing, the positive electrode sheet can be obtained.

### Method for preparing the positive electrode sheet

In a second aspect, an embodiment of the present application provides a method for preparing a positive electrode sheet, including:
a second slurry including second positive electrode active material particles having a hollow structure is provided;
a second slurry is coated on a positive electrode current collector with the second slurry and forming a second positive electrode active material film layer;
a first slurry including first positive electrode active material particles is provided, the first positive electrode active material particles being solid particles; and
the first slurry is coated to form a first positive electrode active material film layer on a side of the second positive electrode active material film layer away from the positive electrode current collector, thereby preparing the positive electrode sheet.

According to the embodiments of the present application, the second slurry containing the second positive electrode active material particles is coated to the positive electrode current collector to form the second positive electrode active material film layer, and the first slurry containing the first positive electrode active material particles is coated, such that the first positive electrode active material film layer is formed on the side of the second positive electrode active material film layer away from the positive electrode current collector. Thus, in the positive electrode sheet including the embodiments of the present application, during the charging and discharging process of the battery, since the concentration of the active ions gradually decreases from the separator to the positive electrode sheet close to the positive electrode current collector during the mass transfer process of the electrolyte, the first positive electrode active material particles in the first positive electrode active material film layer are solid particles, and the deintercalation distance of the active ions in the first positive electrode active material film layer is relatively long (the mass transfer distance is relatively long). The second positive electrode active material film layer includes the second positive electrode active material particles having a hollow structure, and the second positive electrode active material particles having a hollow structure reduce the deintercalation distance (the mass transfer distance is relatively short) of the active ions in the second positive electrode active material film layer, which is beneficial to balancing the deintercalation speed of the active ions in the first positive electrode active material film layer and the second positive electrode active material film layer, and balancing the difference in the charge and discharge (SOC) speed of the active ions between the first positive electrode active material film layer and the second positive electrode active material film layer, which is beneficial to the exertion of the gram capacity of the positive electrode sheet.

The description of the first positive electrode active material particles, the first positive electrode active material film layer, the second positive electrode active material particles, the second positive electrode active material film layer, and the third positive electrode active material particles in any implementation method in the first aspect is independently applicable to this example.

In some optional embodiments, the second slurry includes: a mixture of 60% to 90% of the second positive electrode active material particles and 10% to 40% of the third positive electrode active material particles in terms of mass percentage.

According to the embodiments of the present application, on the basis of balancing the deintercalation speed of the active ions of the first positive electrode active material film layer and the second positive electrode active material film layer, controlling the mass content of the second positive electrode active material particles and the mass content of the third positive electrode active material particles in the second positive electrode active material film layer takes into consideration the structural stability of the positive electrode sheet and the charging and discharging speed of the battery.

### Battery cell

In a third aspect, an embodiment of the present application provides a battery cell, including the positive electrode sheet in the first aspect or the positive electrode sheet prepared by the method in the second aspect. According to the embodiments of the present application, the battery cell includes the positive electrode sheet described above, and therefore the battery has the beneficial effects of the positive electrode sheet described above.

Generally, the battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

In some examples, the first positive active material particles and the second positive active material particles are nickel-containing positive active materials, and the positive electrode sheet is charged from an initial state to a cut-off voltage of 2.7 V at 0.33C, and discharged to a cut-off voltage of 4.25 V at 1C in the battery cell for charge-discharge cycles until the capacity of the battery cell is 80% of the initial state.

A ratio of an I₀₀₃/I₁₀₄ value of the first positive electrode active material particles to an I₀₀₃/I₁₀₄ of the second positive electrode active material particles in the XRD diffraction pattern is (1-1.5): 1.

According to the examples of the present application, the I₀₀₃/I₁₀₄ value of the first positive electrode active material particles represents a ratio of a diffraction peak intensity I₀₀₃ of a (003) crystal plane to a diffraction peak intensity I₁₀₄ of a (104) crystal plane of the first positive electrode active material particles. The I₀₀₃/I₁₀₄ value of the second positive electrode active material particles represents a ratio of a diffraction peak intensity I₀₀₃ of a (003) crystal plane to a diffraction peak intensity I₁₀₄ of a (104) crystal plane of the second positive electrode active material particles.

According to the examples of the present application, by controlling the ratio of the I₀₀₃/I₁₀₄ value of the first positive electrode active material particles to the I₀₀₃/I₁₀₄ value of the second positive electrode active material particles within an appropriate range, it is beneficial to controlling the mixing of lithium and nickel in the first active material film layer and the second active material film layer, balancing the rate of lithium ion deintercalation in the first active material film layer and the second active material film layer, and improving the performance of the battery.

As one example, a detection method for the diffraction peak intensity I₁₀₃ of the (003) crystal plane and the diffraction peak intensity I₁₀₄ of the (104) crystal plane of the first positive electrode active material particles or the diffraction peak intensity I₁₀₃ of the (003) crystal plane and the diffraction peak intensity I₁₀₄ of the (104) crystal plane of the second positive electrode active material particles is as follows: the positive electrode sheet is disassembled from the battery, and the positive electrode sheet is taken with an area of 3*3cm² to 4*4cm²; film powder of the first positive electrode active material film layer and the second positive electrode active material film layer is taken respectively, where the mass of the film powder is 5-10 g, if the powder of the first positive electrode active material film layer and the second positive electrode active material film layer is a block sample after powder scraping, and the sample is prepared in a glove box after grinding, an average particle size of the prepared sample powder is <30 µm, and the powder can pass through a 200 mesh sieve; and the sample is taken using a sample cell having a depth of 1 mm and a diameter of 25 mm, and the sample is prepared by a plate preparation method. A test is then performed: A starting angle is 15°, an ending angle is 70°, a step length is 0.01°, and a duration of each step is 0.6 s. The fixed kernel parameters of the XRD detection device (such as the XRD detection device of Bruker, Germany) are as follows: Voltage: 40 KV, current: 40 mA, anti-scatter slit: 1 mm.

As an example, the structural formulas of the first positive electrode active material particles, the second positive electrode active material particles, and the third positive electrode active material particles are each independently as follows: LiₐNiₓCo_{y}M_{1-x-y}O₂, where M includes one or more of Mn, Al, B, Zr, Sr, Y, Sb, W, Ti, Mg, Nb, and Ba, 0.55≤x≤1.05, 0≤y≤0.45, and 0.8≤a≤1.2. A diffraction angle 2θ₁ of the (003) crystal plane of the first positive electrode active material particles is 18.55° to 18.85°, a diffraction angle 2θ₂ of the (003) crystal plane of the second positive electrode active material particles is 18.85° to 19.00°, and a difference Δθ₁ between the two is 0.20° to 0.30°. A diffraction angle 2θ₃ of the (104) crystal plane of the first positive electrode active material particles is 44.30° to 44.50°, a diffraction angle 2θ₄ of the (104) crystal plane of the second positive electrode active material particles is 45.10° to 45.30°, and a difference Δθ₂ between the two is 0.65° to 0.85°. In the XRD diffraction patterns of the first positive electrode active material particles and the second positive electrode active material particles, the ratio of the diffraction peak intensity I₀₀₃ of the (003) crystal plane to the diffraction peak intensity I₁₀₄ of the (104) crystal plane of the first positive electrode active material particles and the ratio of the diffraction peak intensity I₀₀₃ of the (003) crystal plane to the diffraction peak intensity I₁₀₄ of the (104) crystal plane of the second positive electrode active material particles can be respectively measured.

### [Negative electrode sheet]

A negative electrode sheet includes a negative electrode current collector and a negative electrode film layer disposed on at least one surface of the negative electrode current collector. The negative electrode film layer includes a negative electrode active material.

As an example, the negative electrode current collector has two surfaces opposite in its own thickness direction, and the negative electrode film layer is disposed on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode active material may be a negative electrode active material well-known in the art for batteries. As an example, the negative active material may comprise at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that may be used as a negative electrode active material of a battery may also be used. These negative electrode active materials may be used alone or in combination of two or more thereof.

In some embodiments, the gram capacity of the positive electrode active material is 600 mAh/g to 2,500 mAh/g.

In some embodiments, the negative electrode active material includes silicon monoxide.

In some embodiments, the content of silicon monoxide is 20% to 100% by mass based on the total mass of the negative electrode active material, optionally 50% to 100%.

In some embodiments, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared by the following method: the components for preparing the negative electrode film layer, such as the negative electrode active material, the conductive agent, the binder, and any other components are dispersed in a solvent, such as deionized water to form a negative electrode slurry; and then, the negative electrode slurry is coated on the negative electrode current collector. After processes such as drying and cold pressing, the negative electrode sheet can be obtained.

### [Electrolyte]

The electrolyte functions to conduct ions between the positive electrode sheet and the negative electrode sheet. The type of the electrolyte is not specifically limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

### [Separator]

In some implementations, the battery cell further includes a separator. The type of the separator is not particularly limited in the present application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode sheet, the negative electrode sheet, and the separator may be manufactured into the electrode assembly through a winding process or a lamination process.

In some embodiments, the battery may include a battery cell, which includes the electrode assembly.

In some embodiments, the battery cell may include an outer package. The outer package may be used to encapsulate the electrode assembly and the electrolyte solution described above.

In some embodiments, the outer package of the battery cell may be a hard casing, for example, a hard plastic casing, an aluminum casing, or a steel casing. The outer package of the battery cell may also be a pouch, such as a bag-type pouch. The material of the pouch may be plastic, and examples of the plastic include polypropylene, polybutylene terephthalate, and polybutylene succinate.

The shape of the battery cell is not particularly limited in the present application, and may be a cylindrical shape, a square shape, or any other shape. For example, FIG. 2 shows a battery cell 5 with a square structure as an example.

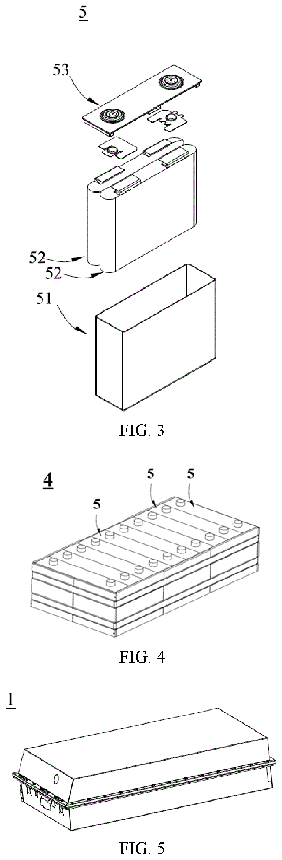

In some embodiments, referring to FIG. 3, the outer package may include a housing 51 and a cover plate 53. The housing 51 may include a bottom plate and side plates connected to the bottom plate, and the bottom plate and the side plates define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the battery cell 5, and those skilled in the art may perform selection according to specific actual requirements.

### Battery

In a fourth aspect, an embodiment of the present application provides a battery, including the battery cell in the third aspect. According to the embodiments of the present application, the battery includes the battery cell described above, and therefore the battery has the beneficial effects of the battery cell described above.

In some embodiments, the battery may further include an box body. The battery cell is accommodated in the box body.

The number of the battery cells included in the battery may be one or more, and the specific number may be selected by those skilled in the art according to the application and capacity of the battery.

Further, in the above battery, the plurality of battery cells are present in the form of a battery module formed by assembling. FIG. 4 shows a battery module 4 as an example. Referring to FIG. 4, in the battery module 4, a plurality of battery cells 5 may be arranged sequentially in the length direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

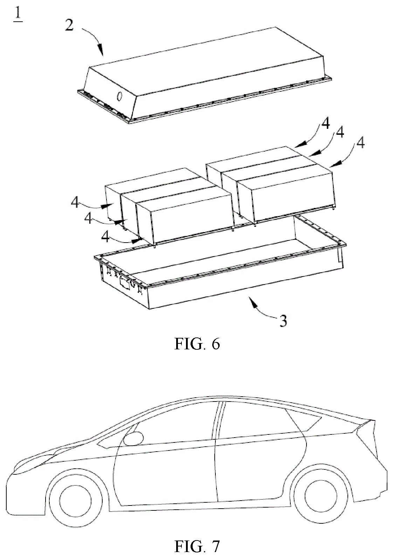

FIG. 5 and FIG. 6 show a battery 1 as an example. Referring to FIG. 5 and FIG. 6, a battery case and a plurality of battery modules 4 disposed in the battery case may be included in the battery 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In some embodiments, the battery can be a battery cell.

### Electric device

In a fifth aspect, an embodiment of the present application provides an electric device, including the battery in the fourth aspect. According to the embodiments of the present application, the electric device includes the battery described above, and therefore the electric device has the beneficial effects of the battery described above.

The battery can be used as a power supply for the electric device, or as an energy storage unit for the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The battery may be selected according to use requirements of the electric device.

FIG. 7 shows an electric device as an example. The electric device is a pure electric vehicle, a hybrid electric vehicle, a plug-in hybrid electric vehicle, or the like.

In another example, the electric device may be a cell phone, a tablet computer, a notebook computer, or the like. The device is generally required to be thin and lightweight, and can use a battery cell as a power supply.

### Examples

Examples of the present application are described below. The examples described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### [Preparation of a positive electrode sheet]

Second positive active material particles and third positive active material particles are respectively nickel-cobalt-manganese (NCM) ternary materials LiNi_{0.96}Co_{0.02}Mn_{0.01} Ba_{0.01}O₂. The second positive electrode active material particles and the third positive electrode active material particles (the mass ratio thereof was 8:2), the conductive agent carbon black, and the binder polyvinylidene fluoride (PVDF) were mixed at a mass ratio of 97:1:2, and N-methylpyrrolidone was added for mixing and stirring for 0.5 h to 6 h to obtain a positive electrode slurry, where a solid content of the positive electrode slurry was 68%; then, the positive electrode slurry was coated to a positive electrode current collector to prepare a second positive electrode active material film layer, where an average particle size DV²50 of the second positive electrode active particles was 7 µm, and an inner diameter d1 thereof was 3 µm; and a wall thickness d2 of an outer wall was 4 µm, and other parameters and parameters of the third positive active material particles were shown in Table 1.
The first positive active material particles are a nickel-cobalt-manganese (NCM) ternary material LiNi_{0.96}Co_{0.02}Mn_{0.01}Ba_{0.01} O₂. The first positive electrode active material particles, the conductive carbon black, and the binder polyvinylidene fluoride (PVDF) were mixed at a mass ratio of 97:1:2 and N-methylpyrrolidone was added for mixing and stirring for 0.5 h to 6 h to prepare a positive electrode slurry, where a solid content of the positive electrode slurry was 68%; then, the positive electrode slurry was uniformly coated on a positive electrode current collector with a coating mass of 35mg/cm² to obtain a first positive electrode active material film layer, where parameters of the first positive electrode active material particles were shown in Table 1; and
after drying, cold-pressing and slitting, a positive electrode sheet was obtained.

### [Preparation of a lithium battery]

Positive electrode sheet: the above prepared positive electrode sheet.

Preparation of a negative electrode sheet: A negative active substance (i.e., artificial graphite and silicon carbon, where the mass ratio of artificial graphite to silicon carbon was 7:3, and the mass content of silicon element in silicon carbon was 49%), a conductive agent carbon black, carbon nanotubes (CNT), a binder styrene-butadiene rubber (SBR), and a thickener sodium hydroxymethylcellulose (CMC-Na) were added into deionized water at a weight ratio of 94.5:1:0.375:2.8:1.325 for mixing and stirring for 0. 5 h to 6 h to obtain a first active substance layer slurry; and the slurry was uniformly coated on a negative electrode current collector in layers, and dried.

Separator: A polypropylene film with a thickness of 7 µm was used as a base film, and a coating with a thickness of 2 µm was coated, where the coating included aluminum oxide and a binder polyvinylidene fluoride, the mass content of the aluminum oxide in the coating was 80%, and the mass content of the binder polyvinylidene fluoride in the coating was 20%.

Electrolyte solution: LiPF₆ and LIFSI were dissolved in a mixed solvent of ethylene carbonate, ethyl methyl carbonate, diethyl carbonate, and fluoroethylene carbonate (FEC) at a volume ratio of 1:1:1:1 to prepare an electrolyte solution in which molar concentrations of LiPF₆ and LIFSI were 1 mol/L, respectively.

Lithium battery assembly The positive electrode sheet, the separator, and the negative electrode sheet were wound in sequence to obtain a bare cell; and the bare cell was placed in a packaging shell, dried and then injected with an electrolyte, and subjected to procedures such as vacuum sealing, standing, formation, and shaping to obtain a lithium-ion battery. Examples 2-1 to 2-2

Similar to Example 1, a difference lies in that: The types of the first positive electrode active material particles, the second positive electrode active material particles, and the third positive electrode active material particles in Example 2-1 are nickel-cobalt-manganese (NCM) ternary materials LiNi_{0.97}Co_{0.01}Mn_{0.01} Ba_{0.01}O₂. The types of the first positive electrode active material particles, the second positive electrode active material particles, and the third positive electrode active material particles in Example 2-2 are nickel-cobalt-manganese (NCM) ternary materials LiNi_{0.98}Co_{0.01}Mn_{0.005}Ba_{0.005}O₂.

### Examples 3-1 to 3-3

Similar to Example 1, a difference lies in that: Parameters of the first positive electrode active material particles in Examples 3-1 to 3-3 are different, which are specifically shown in Table 1.

### Examples 4-1 and 4-9

Similar to Example 1, a difference lies in that: The respective particle sizes and respective contents of the second positive electrode active material particles and the third positive electrode active material particles, and the thickness h2 of the second active material film layer are different, where the inner diameter d1 of the second positive electrode active material particles in Example 4-2 is 4 µm; the wall thickness d2 of the outer wall is 3 µm, the hollow structure therein can be seen, and the inner diameter d1 of the second positive electrode active material particle in Example 4-3 is 2 µm; the wall thickness d2 of the outer wall is 5 µm, the content of the second positive electrode active material particles in the second active material film layer is different in Examples 4-4 to 4-5, the thickness h2 of the second positive electrode active material film layer is different in Example 4-6, and the particle size parameter of the third positive electrode active material particles is different in Examples 4-7 to 4-8. The third positive electrode active material particles are not included in Example 9. Specific parameters are shown in Table 1.

### Comparative Example 1

Similar to Example 1, a difference lies in that: The first positive electrode active material particles, the second positive electrode active particles, and the third positive electrode active particles in Comparative Example 1 are respectively replaced with the first positive electrode active material particles in Example 1 as the positive electrode active particles of the positive electrode sheet. The thickness of the active material film layer in Comparative Example 1 is the sum of the thicknesses of the first positive electrode active material film layer and the second positive electrode active material film layer in Example 1, which is 300 µm.

### Comparative Example 2

Similar to Example 1, a difference lies in that: The first positive electrode active material particles, the second positive electrode active particles, and the third positive electrode active particles in Comparative Example 2 were respectively replaced with the second positive electrode active material particles in Example 1 as the positive electrode active particles of the positive electrode sheet. The thickness of the active material film layer in Comparative Example 2 is the sum of the thicknesses of the first positive electrode active material film layer and the second positive electrode active material film layer in Example 1, which is 300 µm.

### Comparative Example 3

Similar to Example 1, a difference lies in that: The first positive electrode active material particles, the second positive electrode active particles, and the third positive electrode active particles in Comparative Example 3 are respectively replaced with the third positive electrode active material particles in Example 1 as the positive electrode active particles of the positive electrode sheet. The thickness of the active material film layer in Comparative Example 3 is the sum of the thicknesses of the first positive electrode active material film layer and the second positive electrode active material film layer in Example 1, which is 300 µm.

### Performance tests:

Performance of the batteries obtained from the above examples and comparative examples are tested, respectively. The test results are shown in Table 2.

### 1) Discharge capacity test

The prepared battery cell was allowed to stand at 25°C for 2 h, ensuring that the temperature of the battery cell was 25°C. At 25°C, the battery cell was charged at 0.1C to a charge cutoff voltage of 4.25 V, and then charged at a constant voltage continuously at the charge cutoff voltage until the current reached 0.02C, and the charge was cut off (where C represented a rated capacity of the battery cell). The battery cell was allowed to stand at 25°C for 0.5 h. At 25°C, the battery cell was discharged at 0.1C to a discharge cutoff voltage of 2.7 V, and a total discharge capacity C0 discharged from the battery cell was recorded.

### 2) Energy density test

Capacity test for the battery cell: The prepared battery cell was allowed to stand at 25°C for 2 h, ensuring that the temperature of the battery cell was 25°C. At 25°C, the battery cell was charged at 0.1C to a charge cutoff voltage, and then charged at a constant voltage continuously at the charge cutoff voltage until the current reached 0.05C, and the charge was cut off (where C represented a rated capacity of the battery cell). The battery cell was allowed to stand at 25°C for 1 h. At 25°C, the battery cell was discharged at 0.1C to a discharge cutoff voltage, and a total discharge capacity C0 discharged from the battery cell was recorded. The total discharge energy was E0.

Weight measurement for the battery cell: the battery cell was placed on an electronic scale until the weight was stable, and a cell weight value M0 was read.

Energy density calculation: The discharge energy E0 of the battery cell/the weight M0 of the battery cell is the energy density of the battery cell.

### 3) charge time test for 10% to 80% state of charge (SOC)

Voltage calibration: Laminated three electrode battery cell with the same design as the battery was allowed to stand at 25°C for 30 min. At 25°C, the battery cell was charged at 0.33C to a charge cutoff voltage, and then charged at a constant voltage continuously at the charge cutoff voltage until the current reached 0.05C, and the charge was cut off (where C represented a rated capacity of the battery cell); the battery cell was allowed to stand at 25 °C for 1 h; at 25°C, the battery cell was discharged at 0.33C to a discharge cutoff voltage, and a total discharge capacity C1 discharged from the battery cell was recorded; and the battery cell was allowed to stand at 25°C for 1 h.

Charging Test: The laminated three electrode battery cell was allowed to stand at 25 °C for 30 min; the battery cell was discharged at 0.33C1 DC to a discharge cut-off voltage; the battery cell was allowed to stand for 5 min; the battery cell was charged at XC1CC to a charge cut-off voltage (three electrodes monitor the anode potential), and jump to the next step when the anode potential is 0 v; and the above step was repeated 9 times, where the value of x was 5, 4, 4.5, 3, 2, 1, 0.8, 0.5, 0.33 in sequence; and the value of x and the charge capacity Cx corresponding to the anode potential of 0 V were taken.

### 4) Test for a battery capacity retention rate

Voltage calibration was performed on the battery cells prepared in examples and comparative examples by the following method:
the battery cell was allowed to stand at 25 °C for 2 h to ensure that the temperature of the battery cell was 25 °C, and the battery cell was charged to 4.25 V at 0.33C0 at 25 °C and charged at a constant voltage of 4.25 V until the current was 0.05C0; the battery cell was allowed to stand for 1 h; the battery cell was discharged at 0.33C0 to 0.95C0 at 25 °C, and the voltage V1 at this time was recorded; the battery cell was allowed to stand for 5 min; the battery cell was discharged at 0.33C0 to 2.7 V at 25°C; the battery cell was allowed to stand for 5 min; the battery cell was charged at 0.33C0 to 0.97C0 at 25°C, and the voltage V2 at this time was recorded; and the battery cell was allowed to stand for 2 h.

The cyclic test process is as follows: The battery cell was allowed to stand at 25°C for 2 h, ensuring that the temperature of the battery cell was 25°C; the battery cell was charged at 0.33C0 to a voltage V2 at 25°C; the battery cell was allowed to stand for 0.5 h; the battery cell was discharged at 0.33C0 to a voltage V1 at 25°C, and the capacity at this time was recorded as Cn; and the battery cell was allowed to stand for 0.5 h. According to this method, the battery is subjected to a cyclic charge-discharge test until the battery capacity is attenuated to 80%. At this point, the number of cycles is the cycle life of the battery at 25°C.

Relevant parameters and detection results of the positive electrode sheets of the batteries in examples and comparative examples are recorded in Tables 1-2.

**Table 1**

| Item | Preparation of a positive electrode sheet | | | | | | | | | | | | | | | | |
|---|---|---|---|---|---|---|---|---|---|---|---|---|---|---|---|---|---|
| | First positive electrode active material particles | | | | Thickness of the first active material film layer | Second positive electrode active material particles | | | | Content a1 | Third positive electrode active material particles | | | | Content a2 | Thickness of the second active material film layer | Ratio q |
| | Average particle size DV¹ 50/µm | Specific surface area m²/g | Tap density g/cm³ | SPAN | µm | Average particle size DV² 50/µm | Specific surface area m²/g | Tap density g/cm³ | SPAN | | Average particle size DV³ 50/µm | Specific surface area m²/g | Tap density g/cm³ | SPAN | | µm | um/g |
| Example 1 | 12 | 0.3 | 3.2 | 0.5 | 180 | 7 | 0.6 | 2.4 | 1.1 | 80% | 3.5 | 0.65 | 2.8 | 1.3 | 20% | 120 | 1.8 |
| Example 2-1 | 12 | 0.3 | 3.2 | 0.5 | 180 | 7 | 0.6 | 2.4 | 1.1 | 80% | 3.5 | 0.65 | 2.8 | 1.3 | 20% | 120 | 1.8 |
| Example 2-2 | 12 | 0.3 | 3.2 | 0.5 | 180 | 7 | 0.6 | 2.4 | 1.1 | 80% | 3.5 | 0.65 | 2.8 | 1.3 | 20% | 120 | 1.8 |
| Example 3-1 | 16 | 0.2 | 3.4 | 0.32 | 180 | 7 | 0.6 | 2.4 | 1.1 | 80% | 3.5 | 0.65 | 2.8 | 1.3 | 20% | 120 | 1.8 |
| Example 3-2 | 8 | 0.35 | 3.0 | 0.45 | 180 | 7 | 0.6 | 2.4 | 1.1 | 80% | 3.5 | 0.65 | 2.8 | 1.3 | 20% | 120 | 1.8 |
| Example 3-3 | 18 | 0.18 | 3.2 | 0.7 | 180 | 7 | 0.6 | 2.4 | 1.1 | 80% | 3.5 | 0.65 | 2.8 | 1.3 | 20% | 120 | 1.8 |
| Example 4-1 | 12 | 0.3 | 3.2 | 0.5 | 180 | 7.5 | 0.5 | 2.45 | 1.2 | 80% | 3.5 | 0.65 | 2.8 | 1.3 | 20% | 120 | 1.8 |
| Example 4-2 | 12 | 0.34 | 3.1 | 0.5 | 180 | 4 | 0.82 | 2.5 | 0.9 | 80% | 3.5 | 0.65 | 2.8 | 1.3 | 20% | 120 | 1.8 |
| Example 4-3 | 12 | 0.28 | 3.3 | 0.5 | 180 | 10 | 0.65 | 2.3 | 1.3 | 80% | 3.5 | 0.65 | 2.8 | 1.3 | 20% | 120 | 1.8 |
| Example 4-4 | 12 | 0.3 | 3.2 | 0.5 | 180 | 7 | 0.6 | 2.4 | 1.1 | 60% | 3.5 | 0.65 | 2.8 | 1.3 | 40% | 120 | 1.8 |
| Example 4-5 | 12 | 0.3 | 3.2 | 0.5 | 180 | 7 | 0.6 | 2.4 | 1.1 | 90% | 3.5 | 0.65 | 2.8 | 1.3 | 10% | 120 | 1.8 |
| Example 4-6 | 12 | 0.3 | 3.2 | 0.5 | 130 | 7 | 0.6 | 2.4 | 1.1 | 80% | 3.5 | 0.65 | 2.8 | 1.3 | 20% | 170 | 1.65 |
| Example 4-7 | 12 | 0.3 | 3.2 | 0.5 | 180 | 7 | 0.6 | 2.4 | 1.1 | 80% | 2 | 0.7 | 2.4 | 0.8 | 20% | 120 | 1.8 |
| Example 4-8 | 12 | 0.3 | 3.2 | 0.5 | 180 | 7 | 0.6 | 2.4 | 1.1 | 80% | 3.2 | 0.68 | 2.7 | 1.5 | 20% | 120 | 1.8 |
| Example 4-9 | 12 | 0.3 | 3.2 | 0.5 | 240 | 7 | 0.6 | 2.4 | 1.1 | 100% | / | / | / | / | / | 120 | 2 |
| Comparative Example 1 | 12 | 0.3 | 3.2 | 0.5 | 300 | / | / | / | / | / | / | / | / | / | / | / | / |
| Comparative Example 2 | / | / | / | / | / | 7 | 0.6 | 2.4 | 1.1 | 100% | / | / | / | / | / | 300 | / |
| Comparative Example 3 | / | / | / | / | / | / | / | / | / | / | 3.5 | 0.65 | 2.8 | 1.9 | 100 | 300 | / |

The content a1 represents the mass content of the second positive electrode active material particles in the second active material film layer, and the content a2 represents the mass content of the third positive electrode active material particles in the second active material film layer; the ratio q represents the ratio of the thickness h1 of the first positive electrode active material film layer to the sum of the mass of the first positive electrode active material film layer and the mass of the second positive electrode active material film layer.

**Table 2**

| Item | Battery Performance | | | |
|---|---|---|---|---|
| | Discharge gram capacity | Energy density | Charging time | Cycle number at 80% capacity retention |
| | mAh/g | Wh/kg | min | |
| Example 1 | 235 | 445 | 15 | 1024 |
| Example 2-1 | 236 | 448 | 16 | 786 |
| Example 2-2 | 234 | 442 | 17 | 782 |
| Example 3-1 | 233 | 440 | 17.5 | 1048 |
| Example 3-2 | 236 | 448 | 15 | 923 |
| Example 3-3 | 235.3 | 446 | 14 | 989 |
| Example 4-1 | 234 | 442 | 18 | 989 |
| Example 4-2 | 234.9 | 444 | 14 | 924 |
| Example 4-3 | 235.2 | 446 | 16 | 952 |
| Example 4-4 | 233 | 440 | 22 | 961 |
| Example 4-5 | 231 | 438 | 25 | 971 |
| Example 4-6 | 230 | 435 | 26 | 985 |
| Example 4-7 | 231 | 438 | 19 | 788 |
| Example 4-8 | 230 | 425 | 21 | 888 |
| Example 4-9 | 230 | 423 | 25 | 512 |
| Comparative Example 1 | 227 | 430 | 38 | 460 |
| Comparative Example 2 | 229 | 435 | 42 | 424 |
| Comparative Example 3 | 228 | 433 | 46 | 328 |

It can be seen from the data in Table 1 that when the first positive active material particles and the second positive active material particles in examples are sequentially present in the first active material film layer and the second active material film layer of the positive electrode sheet, since the first positive active material particles and the second positive active material particles have different material characteristics, compared with comparative examples, the charging time of the positive electrode sheet is shortened, which is beneficial to the exertion of the gram capacity of the positive electrode sheet, improving the discharge capacity of the battery, and improving the energy density of the battery and the retention rate of the cycle capacity of the battery in the charging and discharging process of the battery. Therefore, the discharge gram capacity, the charging time, and the cycle number at 80% capacity retention of the battery cell in Example 1 are respectively better than those in Comparative Examples 1-3.

The reasons for the analysis may be: In the mass transfer process of the electrolyte, the concentration of the active ions gradually decreases from the separator to the position of the positive electrode sheet close to the positive electrode current collector, the first positive electrode active material particles in the first positive electrode active material film layer are solid particles, and the deintercalation distance of the active ions in the first positive electrode active material film layer is relatively long (the mass transfer distance is relatively long). The second positive electrode active material film layer includes the second positive electrode active material particles having a hollow structure, and the second positive electrode active material particles having a hollow structure reduce the deintercalation distance (the mass transfer distance is relatively short) of the active ions in the second positive electrode active material film layer.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. Furthermore, without departing from the gist of the present application, various modifications that can be conceived by those skilled in the art to the embodiments, and other modes constructed by combining some constituent elements of the embodiments, are also included within the scope of the present application.

## Claims

1. A positive electrode sheet, comprising:
a positive electrode current collector;
a first positive electrode active material film layer disposed on at least one side of the positive electrode current collector, the first positive electrode active material film layer comprising solid first positive electrode active material particles; and
a second positive electrode active material film layer disposed between the first positive electrode active material film layer and the positive electrode current collector, the second positive electrode active material film layer comprising second positive electrode active material particles having a hollow structure.

2. The positive electrode sheet according to claim 1, wherein particle sizes of the first positive electrode active material particles and the second positive electrode active material particles satisfy one or more of the following conditions:
1) an average particle size D_{V}¹50 of the first positive electrode active material particles being greater than or equal to an average particle size Dv²50 of the second positive electrode active material particles;
2) the average particle size Dv¹50 of the first positive electrode active material particles being 8 µm to 18 µm;
3) the average particle size Dv²50 of the second positive electrode active material particles being 2 µm to 10 µm;
3) a particle size distribution span of the first positive electrode active material particles being 0.3 to 0.7;
4) a particle size distribution span of the second positive electrode active material particles being 0.9 to 1.3;
5) an inner diameter d1 of the hollow structure being 0.6 µm to 5 µm;
6) a wall thickness d2 of an outer wall of the hollow structure being 0.6 µm to 10 µm; and
7) the first positive electrode active material particles and the second positive electrode active material particles respectively comprising the following structural formulas: LiₐNiₓCo_{y}M_{1-x-y}O₂, wherein M comprises one or more of Mn, Al, B, Zr, Sr, Y, Sb, W, Ti, Mg, Nb, and Ba, 0.55≤x≤1.05, 0≤y≤0.45, and 0.8≤a≤1.2.

3. The positive electrode sheet according to claim 1, wherein specific surface areas of the first positive electrode active material particles and the second positive electrode active material particles satisfy one or more of the following conditions:
1) the specific surface area of the first positive electrode active material particles being 0.1 m²/g to 0.5 m²/g; and
2) the specific surface area of the second positive electrode active material particles being 0.35 m²/g to 0.8 m²/g.

4. The positive electrode sheet according to claim 1, wherein the first positive electrode active material particles and the second positive electrode active material particles satisfy one or more of the following conditions:
1) a tap density of the first positive electrode active material particles being 1.8 g/cm³ to 4 g/cm³; and
2) a tap density of the second positive electrode active material particles being 1.3 g/cm³ to 2.6 g/cm³.

5. The positive electrode sheet according to any one of claims 1 to 4, wherein the second positive electrode active material film layer comprises third positive electrode active material particles, and the average particle size Dv²50 of the second positive electrode active material particles is greater than an average particle size Dv³50 of the third positive electrode active material particles.

6. The positive electrode sheet according to claim 5, wherein the third positive electrode active material particles satisfy one or more of the following conditions:
1) the average particle size Dv³50 of the third positive electrode active material particles being 0.8 µm to 5 µm;
2) a specific surface area of the third positive electrode active material particles being 0.4 m²/g to 0.9 m²/g;
3) a tap density of the third positive electrode active material particles being 1.8 g/cm³ to 3.4 g/cm³;
4) the third positive electrode active material particles being one or more of particles having a hollow structure and solid particles;
5) a particle size distribution span of the third positive electrode active material particles being 0.8 to 1.5; and
6) the third positive electrode active material particles comprising the following general formula: LiₐNiₓCo_{y}M_{1-x-y}O₂, wherein M comprises one or more of Mn, Al, B, Zr, Sr, Y, Sb, W, Ti, Mg, Nb, and Ba, 0.55≤x≤1.05, 0≤y≤0.45, and 0.8≤a≤1.2.

7. The positive electrode sheet according to any one of claims 1 to 6, wherein the first positive electrode active material particles, the second positive electrode active material particles, and the third positive electrode active material particles respectively comprise any one or more of LiNi_{0.96}Co_{0.02}Mn_{0.01}Ba_{0.01}O₂, LiNi_{0.97}Co_{0.01}Mn_{0.01}Ba_{0.01}O₂, and LiNi_{0.98}Co_{0.01}Mn_{0.005}Ba_{0.005}O₂.

8. The positive electrode sheet according to any one of claims 1 to 7, wherein a thickness h1 of the first positive electrode active material film layer and a thickness h2 of the second positive electrode active material film layer satisfy one or more of the following conditions:
1) a ratio of the thickness h1 of the first positive electrode active material film layer to the thickness h2 of the second positive electrode active material film layer being 10: (3.3 to 23.5);
2) the thickness h1 of the first positive electrode active material film layer being 130 µm to 200 µm; and
3) the thickness h2 of the second positive electrode active material film layer being 50 µm to 170 µm.

9. The positive electrode sheet according to any one of claims 1 to 8, wherein the positive electrode sheet satisfies one or more of the following conditions:
1) a porosity of the first positive electrode active material film layer being greater than a porosity of the second positive electrode active material film layer;
2) the porosity of the first positive electrode active material film layer being 26% to 50%;
3) the porosity of the second positive electrode active material film layer being 30% to 40%;
4) a compaction density of the first positive electrode active material film layer being less than a compaction density of the second positive electrode active material film layer;
5) the compaction density of the first positive electrode active material film layer being 2.9 g/cm³ to 3.3 g/cm³;
6) the compaction density of the second positive electrode active material film layer being 3.2 g/cm³ to 3.7 g/cm³;
7) a gram capacity of the first positive electrode active material film layer being 225 mAh/g to 240 mAh/g; and
8) a gram capacity of the second positive electrode active material film layer being 220 mAh/g to 235 mAh/g.

10. A method for preparing a positive electrode sheet, comprising:
providing a second slurry comprising second positive electrode active material particles having a hollow structure;
coating a second slurry on a positive electrode current collector with the second slurry and forming a second positive electrode active material film layer;
providing a first slurry comprising first positive electrode active material particles, the first positive electrode active material particles being solid particles; and
applying the first slurry to form a first positive electrode active material film layer on a side of the second positive electrode active material film layer away from the positive electrode current collector, thereby preparing the positive electrode sheet.

11. The method according to claim 10, wherein the second slurry comprises: a mixture of 60% to 90% of the second positive electrode active material particles and 10% to 40% of third positive electrode active material particles in terms of mass percentage.

12. A battery cell, comprising the positive electrode sheet according to any one of claims 1 to 9 or the positive electrode sheet prepared by the method according to claim 10 or 11.

13. A battery, comprising the battery cell according to claim 12.

14. An electric device, comprising the battery according to claim 13.
